# EUROPEAN PATENT APPLICATION

(11) **EP 4 787 447 A1**
(43) Date of publication of application: **05.08.2026**
(21) Application number: 24895488.5
(22) Date of filing: 28.05.2024
(51) Int. Cl.: H01M 4/13, H01M 4/133, H01M 4/134, H01M 4/36, H01M 4/38, H01M 4/583, H01M 10/0525, H01M 4/587

(54) **SECONDARY BATTERY AND ELECTRIC DEVICE**

(30) Priority: 30.11.2023 CN 202311643955
(71) Applicant: Contemporary Amperex Technology Co., Limited, Ningde, Fujian 352100 (CN)
(72) Inventor: WU, Kai, Ningde, Fujian 352100 (CN); LI, Lianchuan, Ningde, Fujian 352100 (CN); LI, Yuanyuan, Ningde, Fujian 352100 (CN); SHEN, Rui, Ningde, Fujian 352100 (CN); HE, Libing, Ningde, Fujian 352100 (CN)
(74) Representative: Lorenz Seidler Gossel Part. mbB
(86) International application number: PCT/CN2024/095804
(87) International publication number: WO 2025/112378

(57) **Abstract**

A secondary battery and an electric device. The secondary battery comprises a negative electrode sheet. The negative electrode sheet comprises a negative electrode current collector and a negative electrode film layer located on at least one surface of the negative electrode current collector, wherein the negative electrode film layer has a first surface away from the negative electrode current collector and a second surface arranged opposite to the first surface; the thickness of the negative electrode film layer is denoted as H; a region within a thickness range from the first surface of the negative electrode film layer to 0.3H is denoted as a first region, which comprises a first negative electrode active material; the first negative electrode active material comprises a first carbon-based material; and the first carbon-based material satisfies the condition that the total pore area S1 of an external region is less than the total pore area S2 of an internal region. The secondary battery has improved dynamic performance, and the volume distribution particle size Dv50 of the first carbon-based material is less than or equal to 15 µm.

## Description

### CROSS-REFERENCE TO RELATED APPLICATION

The present disclosure is based on and claims priority to Chinese Patent Application No. 202311643955.4, filed on November 30, 2023 and entitled "SECONDARY BATTERY AND ELECTRIC DEVICE", the content of which is incorporated herein by reference in its entirety.

### TECHNICAL FIELD

The present disclosure relates to the technical field of batteries, and in particular, to a secondary battery and an electric device.

### BACKGROUND

In recent years, secondary batteries have been widely used in energy storage power systems such as hydropower, thermal power, wind power, and solar power stations, as well as in various fields such as electric tools, electric bicycles, electric motorcycles, electric vehicles, and aerospace. Currently, as the application range of secondary batteries becomes increasingly widespread, the performance of secondary batteries faces great challenges. For, for example, electrically powered devices, rapid charge and discharge performance of secondary batteries is increasingly important. Therefore, the secondary battery is required to have better kinetics performance.

### SUMMARY

The present disclosure is made in view of the above issues, and its objective is to provide a secondary battery and an electric device. The secondary battery has improved kinetics performance.

In order to achieve the above objective, a first aspect of the present disclosure provides a secondary battery. The secondary battery includes a negative electrode plate, the negative electrode plate includes a negative electrode current collector and a negative electrode film layer located on at least one surface of the negative electrode current collector, the negative electrode film layer is provided with a first surface away from the negative electrode current collector and a second surface opposite to the first surface, and a thickness of the negative electrode film layer is denoted as H;
where a region within a thickness range from the first surface of the negative electrode film layer to 0.3H is denoted as a first region of the negative electrode film layer, the first region includes a first negative electrode active material, and the first negative electrode active material includes a first carbon-based material; a volume distribution particle size Dv50 of the first carbon-based material is denoted as D, the first carbon-based material includes an external region and an internal region located inside the external region, and the external region refers to a region formed by extending a distance of 0.25D from a particle surface of the first carbon-based material to an interior of a particle; in a cross-sectional view of the first carbon-based material, a total pore area of the external region is denoted as S1, a total pore area of the internal region is denoted as S2, and then the first carbon-based material satisfies S2 > S1, and moreover, the volume distribution particle size Dv50 of the first carbon-based material is less than or equal to 15 µm.

In the present disclosure, when the first carbon-based material defined above is disposed at least on the side of the negative electrode film layer of the negative electrode plate away from the negative electrode current collector, the kinetics characteristics of the first carbon-based material can be exerted, thereby improving the kinetics performance of the secondary battery.

According to some embodiments, the volume distribution particle size Dv50 of the first carbon-based material is 7 µm to 13 µm. When the volume distribution particle size Dv50 of the first carbon-based material is within the above range, the kinetics performance of the secondary battery is further improved.

According to some embodiments, the first carbon-based material satisfies 1.5 ≤ S2/S1 ≤ 500, optionally 2.5 ≤ S2/S1 ≤ 450.

According to some embodiments, an area of a pore structure in the external region of the first carbon-based material is less than or equal to 0.15 µm², optionally less than or equal to 0.13 µm²; and/or the internal region of the first carbon-based material includes one or more pore structures with a pore area greater than or equal to 0.15 µm², optionally one or more pore structures with a pore area of 0.15 µm² to 2.00 µm². The structure of the external region of the particle of the first carbon-based material having the above structure is denser than that of the internal region. In this way, in an aspect, the compaction density of the negative electrode film layer can be improved, thereby improving the energy density of the secondary battery; in another aspect, sufficient and stable expansion space can be reserved for the volume change of the first carbon-based material particles, such that the risk of crushing the first carbon-based material particles is reduced, and the entry of an electrolytic solution into the particles is reduced, thereby reducing the occurrence of side reactions and the consumption of active ions. This further improves the storage performance of the secondary battery, and in addition, the compaction density of the negative electrode film layer can also be improved.

According to some embodiments, at least a portion of a surface of the first carbon-based material is provided with a carbon coating layer. When at least a portion of the surface of the first carbon-based material is provided with a carbon coating layer, the kinetics performance of the secondary battery can be effectively improved. According to some embodiments, the entire surface of the first carbon-based material is provided with a carbon coating layer.

According to some embodiments, the first carbon-based material includes primary particles. Optionally, a proportion of the primary particles in the first carbon-based material is ≥ 80%. When the first carbon-based material mainly exists in the form of primary particles, the kinetics performance of the secondary battery is facilitated.

According to some embodiments, a region within a thickness range from the second surface of the negative electrode film layer to 0.3H is denoted as a second region of the negative electrode film layer, the second region is disposed between the negative electrode current collector and the first region, the second region includes a second negative electrode active material, and the second negative electrode active material includes a second carbon-based material. In the embodiments, the second region of the negative electrode film layer is close to the negative electrode current collector. The placement of the second carbon-based material, which is different from the first carbon-based material, in this region does not have a discernible impact on the kinetics performance of the secondary battery. Meanwhile, other secondary performance can be improved by means of the characteristics of the second carbon base, such as the energy density.

Optionally, the second carbon-based material includes artificial graphite. When the artificial graphite is disposed in at least the second region, the kinetics performance of the secondary battery will not be significantly affected, and at the same time, since the artificial graphite has a good powder compaction density, the capacity density of the secondary battery can be improved. In addition, due to the characteristics of artificial graphite that is easily deformed by cold pressing, when disposed under the negative electrode film layer, the rolling pressure of the electrode plate can be effectively reduced, and the damage to the carbon-based material can be reduced, thereby prolonging the cycle life of the secondary battery.

According to some embodiments, the volume distribution particle size Dv50 of the first carbon-based material is less than the volume distribution particle size Dv50 of the second carbon-based material. Optionally, the volume distribution particle size Dv50 of the second carbon-based material is 13 µm to 19 µm, and further optionally, 14 µm to 18 µm. When the second carbon-based material has a larger particle size than the first carbon-based material, the compaction density of the powder can be increased, thereby increasing the compaction density difference between the upper layer and the lower layer of the negative electrode film plate and improving the kinetics performance of the secondary battery.

In some embodiments, a powder compaction density of the second carbon-based material under a pressure of 50,000 N is 1.80 g/cm³ to 2.05 g/cm³, optionally 1.85 g/cm³ to 2.03 g/cm³. The powder compaction density of the second carbon-based material is within the above range, which is beneficial to improve the energy density of the secondary battery.

According to some embodiments, a surface of the second carbon-based material is provided with no coating layer. The second carbon-based material is disposed in the second region of the negative electrode film layer close to the negative electrode current collector. If the coating layer is disposed on the surface of the second carbon-based material, the powder compaction density will be affected, so it is more beneficial to the energy density of the secondary battery without the coating layer.

According to some embodiments, the second carbon-based material includes artificial graphite with secondary particles. Optionally, a proportion of the artificial graphite with the secondary particles in the second carbon-based material is greater than or equal to 80%. When the second carbon-based material includes the secondary particles, the isotropy of the negative electrode plate can be improved compared with the case where the second carbon-based material is used only in the form of primary particles, thereby further facilitating the kinetics performance of the secondary battery. In particular, when the second carbon-based material is mainly in the form of secondary particles, the kinetics performance of the secondary battery can be improved.

According to some embodiments, a particle size distribution of the second carbon-based material satisfies (Dv90-Dv10)/Dv50 ≤ 1.25, optionally 0.90 to 1.25. When the particle size distribution of the second carbon-based material is narrow, it is beneficial to improve the energy density and give consideration to the kinetics performance of the secondary battery.

According to some embodiments, a specific capacity of the first carbon-based material is greater than a specific capacity of the second carbon-based material. Optionally, the specific capacity of the first carbon-based material is ≥ 355 mAh/g, optionally 355 mAh/g to 368 mAh/g. Optionally, the specific capacity of the second carbon-based material is 350 mAh/g to 365 mAh/g, optionally 352 mAh/g to 362 mAh/g. The higher specific capacity of the first carbon-based material and the second carbon-based material can jointly improve the energy density of the secondary battery.

According to some embodiments, a degree of graphitization of the first carbon-based material is ≥ 95.0%, optionally 95.5% to 98.0%; and/or a degree of graphitization of the second carbon-based material is 90.0% to 95.5%, optionally 92.0% to 95.5%. The higher degree of graphitization of the two materials is beneficial to improve the energy density of the secondary battery.

According to some embodiments, a specific surface area of the first carbon-based material is 1.0 m²/g to 2.8 m²/g, optionally 1.3 m²/g to 2.1 m²/g; and/or a specific surface area of the second carbon-based material is 0.8 m²/g to 2.0 m²/g, optionally 1.1 m²/g to 1.7 m²/g. The specific surface area within an appropriate range is advantageous for kinetics performance of the secondary battery.

According to some embodiments, the first carbon-based material satisfies at least one of the following:
(1) the first carbon-based material satisfies: (Dv90-Dv10)/Dv50 ≤ 1.40, optionally 0.90 to 1.40;
(2) a powder compaction density of the first carbon-based material under a pressure of 50,000 N is 1.75 g/cm³ to 2.00 g/cm³, optionally 1.80 g/cm³ to 1.98 g/cm³;
(3) a tap density of the first carbon-based material is 0.90 g/cm³ to 1.30 g/cm³, optionally 0.95 g/cm³ to 1.25 g/cm³; and
(4) a volume distribution particle size Dv90 of the first carbon-based material is 13 µm to 30 µm, optionally 16 µm to 23 µm.

According to some embodiments, the second carbon-based material satisfies at least one of the following:
(1) a tap density of the second carbon-based material is 0.85 g/cm³ to 1.25 g/cm³, optionally 0.90 g/cm³ to 1.15 g/cm³; and
(2) the second carbon-based material satisfies 0.050 ≤ I_{D}/I_{G} ≤ 0.300, optionally 0.070 ≤ I_{D}/I_{G} ≤ 0.200, where I_{D} represents a D peak intensity at 1350 ± 50 cm⁻¹ of a Raman spectrum, and I_{G} represents a G peak intensity at 1580 ± 50 cm⁻¹ of the Raman spectrum.

According to some embodiments, the first negative electrode active material and/or the second negative electrode active material further includes a silicon-based material; and optionally, a mass proportion of the first negative electrode active material is less than or equal to 10%, optionally 5% to 10%, and/or a mass proportion of the second negative electrode active material is less than or equal to 10%, optionally 5% to 10%.

According to some embodiments, the negative electrode film layer satisfies at least one of the following:
(1) a compaction density of the negative electrode film layer is ≤ 1.85 g/cm³, optionally 1.45 g/cm³ to 1.75 g/cm³;
(2) a porosity of the negative electrode film layer is 18.0% to 38.0%, optionally 19.0% to 34.0%;
(3) an OI value of the negative electrode film layer is ≤ 30.0, optionally 8.0 to 23.0; and
(4) a thickness of the negative electrode film layer is ≥ 40 µm, optionally 40 µm to 140 µm.

A second aspect of the present disclosure provides an electric device. The electric device includes the secondary battery according to any one of the above embodiments. When the electric device includes the secondary battery with improved kinetics performance, charging can be performed at a relatively high speed.

### BRIEF DESCRIPTION OF THE DRAWINGS

FIG. 1 is a schematic diagram of an embodiment of a negative electrode plate of the present disclosure.
FIG. 2 is a schematic diagram of a cross-sectional image of a particle of a first carbon-based material of the present disclosure.
FIG. 3 is an ion-polished cross-sectional (CP) view of an embodiment of a first carbon-based material of the present disclosure.
FIG. 4 is a schematic diagram of an embodiment of a negative electrode plate according to the present disclosure.
FIG. 5 is a schematic diagram of another embodiment of a negative electrode plate of the present disclosure.
FIG. 6 is a schematic diagram of yet another embodiment of a negative electrode plate of the present disclosure.
FIG. 7 is a schematic diagram of a battery cell according to an embodiment of the present disclosure.
FIG. 8 is an exploded view of the battery cell according to an embodiment of the present disclosure shown in FIG. 7.
FIG. 9 is a schematic diagram of a battery module according to an embodiment of the present disclosure.
FIG. 10 is a schematic diagram of a battery pack according to an embodiment of the present disclosure.
FIG. 11 is an exploded view of the battery pack according to an embodiment of the present disclosure shown in FIG. 10.
FIG. 12 is a schematic diagram of an electric device in which a secondary battery is used as a power source according to an embodiment of the present disclosure.

Description of the reference numerals:
1 battery pack; 2 upper case body; 3 lower case body; 4 battery module; 5 battery cell; 51 housing; 52 electrode assembly; 53 top cover assembly; 10 negative electrode plate; 101 negative electrode current collector; 102 negative electrode film layer; 102a first surface; 102b second surface; 1021 first region; 1022 second region; 1023 middle region; 200 first carbon-based material; 201 external region; 202 internal region.

### DETAILED DESCRIPTION

Hereinafter, the embodiments of the secondary battery and the electric device of the present disclosure are specifically disclosed in detail with appropriate reference to the drawings. However, unnecessarily detailed descriptions may be omitted. For example, detailed descriptions of well-known matters and repetitive descriptions of actually identical structures may be omitted. This is to avoid unnecessary lengthiness of the following descriptions and to facilitate understanding by those skilled in the art. Additionally, the drawings and the following descriptions are provided to enable those skilled in the art to fully understand the present disclosure and are not intended to limit the subject matter recited in the claims.

The "ranges" disclosed in the present disclosure are defined with lower and upper limits. A given range is defined by selecting a lower limit and an upper limit that delineate the boundaries of a particular range. Ranges defined in this manner may include or exclude the end values and can be combined arbitrarily, which means that any lower limit may be combined with any upper limit to form a range. For example, if ranges of 60-120 and 80-110 are listed for a particular parameter, it is understood that ranges of 60-110 and 80-120 are also anticipated. Additionally, if the minimum range values listed are 1 and 2, and the maximum range values listed are 3, 4, and 5, then the following ranges can all be anticipated: 1-3, 1-4, 1-5, 2-3, 2-4, and 2-5. In the present disclosure, unless otherwise specified, the numerical range "a to b" indicates an abbreviated representation of any combination of real numbers between a and b, where both a and b are real numbers. For example, the numerical range "0-5" indicates that all real numbers between "0-5" are listed herein, and "0-5" is merely an abbreviated representation of a combination of these numerical values. Additionally, when stating that a parameter is an integer ≥ 2, it is equivalent to disclosing that the parameter is, for example, an integer of 2, 3, 4, 5, 6, 7, 8, 9, 10, 11, 12, or the like.

Unless otherwise specified, all embodiments and optional embodiments of the present disclosure may be combined with one another to form new technical solutions.

Unless otherwise specified, all technical features and optional technical features of the present disclosure may be combined with one another to form new technical solutions.

Unless otherwise specified, all steps of the present disclosure can be performed sequentially or randomly, preferably sequentially. For example, if the method includes steps (a) and (b), it indicates that the method may include steps (a) and (b) performed sequentially or steps (b) and (a) performed sequentially. For example, if the mentioned method may further include step (c), it indicates that step (c) may be added to the method in any order; for example, the method may include steps (a), (b) and (c), or steps (a), (c) and (b), or steps (c), (a) and (b), or the like.

Unless otherwise specified, the terms used in the present disclosure have well-known meanings that are commonly understood by those skilled in the art.

Unless otherwise specified, the values of the parameters mentioned in the present disclosure can be measured by various test methods commonly used in the art. For example, they can be measured according to the test methods given in the present disclosure.

Unless otherwise specified, in the present disclosure, the term "active ion" refers to an ion that can be intercalated and deintercalated back and forth between the positive and negative electrodes of the secondary battery, including but not limited to, lithium ion, and the like.

In the embodiments of the present disclosure, the battery may be a battery cell (also known as a cell), or the battery may be a battery module group or a battery pack including a plurality of battery cells. The battery cell refers to a basic unit that can realize the mutual conversion between chemical energy and electric energy. It can be used for making battery module groups or battery packs to supply power to electric devices. The battery cell may be a secondary battery, which refers to a battery cell that can continue to be used by activating the active material through charging after the battery cell is discharged. The battery cell may be a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, a lead storage battery, or the like. This is not limited in the embodiments of the present disclosure.

With the widespread application of secondary batteries, higher requirements are put forward for the charging speed of secondary batteries, i.e., kinetics performance. However, the key to improving the kinetics performance, especially the fast charging performance, of the secondary battery is to improve the kinetics performance of the negative electrode by reducing the areal density of the negative electrode film layer or reducing the compaction density of the negative electrode film layer so as to improve the kinetics performance of the negative electrode. However, a large number of studies have shown that the above method for improving the kinetics of the negative electrode only improves the kinetics performance of the battery to a certain extent, while the energy density of the secondary battery will be significantly reduced.

As a result, it is difficult for the secondary battery of the related art to achieve both high energy density and improved kinetics performance.

In view of this, a first aspect of the embodiments of the present disclosure provides a secondary battery. The secondary battery achieves the improved kinetics performance through the design of the negative electrode plate. According to further embodiments, the secondary battery also achieves good energy density.

The term "secondary battery" described herein refers to a battery cell, a battery module, or a battery pack.

Typically, the secondary battery cell includes a positive electrode plate, a negative electrode plate, an electrolyte, and a separator. During the charging and discharging process of the battery, active ions are intercalated and deintercalated back and forth between the positive electrode plate and the negative electrode plate. The electrolyte conducts ions between the positive electrode plate and the negative electrode plate. The separator is disposed between the positive electrode plate and the negative electrode plate to primarily prevent the positive and negative electrodes from short-circuiting while allowing the passage of ions.

### [Negative Electrode Plate]

The secondary battery of the present disclosure includes a negative electrode plate, the negative electrode plate includes a negative electrode current collector and a negative electrode film layer located on at least one surface of the negative electrode current collector, the negative electrode film layer is provided with a first surface away from the negative electrode current collector and a second surface opposite to the first surface, and the thickness of the negative electrode film layer is denoted as H; where a region within a thickness range from the first surface of the negative electrode film layer to 0.3H is denoted as a first region of the negative electrode film layer, the first region includes a first negative electrode active material, and the first negative electrode active material includes a first carbon-based material; a volume distribution particle size Dv50 of the first carbon-based material is denoted as D, the first carbon-based material includes an external region and an internal region located inside the external region, and the external region refers to a region formed by extending a distance of 0.25D from a particle surface of the first carbon-based material to an interior of a particle; in a cross-sectional view of the first carbon-based material, a total pore area of the external region is denoted as S1, a total pore area of the internal region is denoted as S2, and then the first carbon-based material satisfies S2 > S1, and moreover, the volume distribution particle size Dv50 of the first carbon-based material is less than or equal to 15 µm.

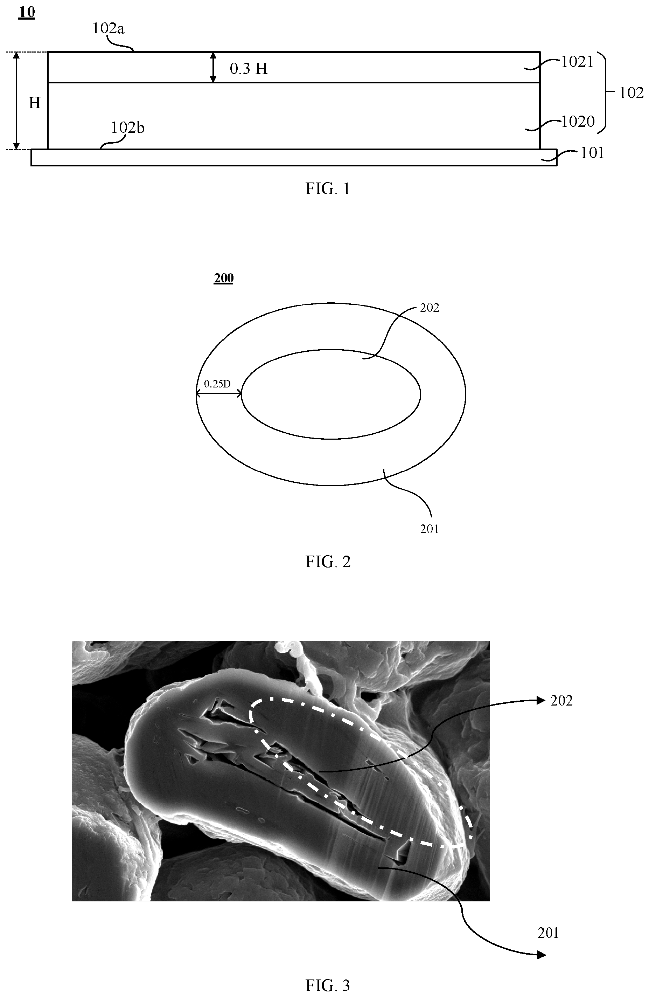

Referring to FIG. 1, a schematic diagram of an embodiment of a negative electrode plate of the present disclosure is shown. As shown in FIG. 1, in the embodiment, the negative electrode plate 10 includes a negative electrode current collector 101 and a negative electrode film layer 102 formed on at least one surface of the negative electrode current collector 101. The negative electrode film layer 102 is provided with a first surface 102a away from the negative electrode current collector 101 and a second surface 102b opposite to the first surface 102a. The thickness of the negative electrode film layer 102 is denoted as H. A region within a thickness range from the second surface 102b of the negative electrode film layer to 0.3 H is denoted as a first region 1021 of the negative electrode film layer. A negative electrode film layer region within a thickness range of 0.7H other than the first region 1021 is denoted as a remaining region 1020. The thickness H of the negative electrode film layer refers to the thickness of the negative electrode film layer located on a single side of the negative electrode current collector.

It should be understood that in the embodiment shown in the figure, the second surface 102b is in contact with the upper surface of the negative electrode current collector 101, but the structure of the negative electrode plate of the present disclosure is not limited thereto. For example, an additional layer may be present between the negative electrode film layer 102 and the negative electrode current collector 101. In this case, the second surface 102b is not in direct contact with the negative electrode current collector 101.

In the embodiment, the first carbon-based material is disposed in the first region 1021 of the negative electrode film layer. According to some embodiments, at least one negative electrode active material different from the first carbon-based material is disposed in at least a portion of the remaining region 1020. Illustratively, an additional negative electrode active material (for example, an additional carbon-based material) is disposed in at least a portion of the remaining region 1020. Illustratively, the first carbon-based material is also present in at least a portion of the remaining region 1020 adjacent to the first region 1021. For example, the first carbon-based material is present in a portion of the remaining region 1020 adjacent to the first region 1021.

In the present disclosure, the total pore area S1 of the external region of the first carbon-based material is less than the total pore area S2 of the internal region. This means that the structure of the external region of the first carbon-based material is denser than the internal region thereof. In addition, the first carbon-based material in the present disclosure satisfies "S2 > S1", which means that the first carbon-based material has a pore structure that can be directly observed from a cross-sectional image (for example, a scanning electron microscope image with a magnification of 1000 times). That is, the external region in the main body structure of the first carbon-based material has a smaller pore area.

Referring to FIG. 2, a schematic diagram of a cross-sectional image of a particle of the first carbon-based material 200 of the present disclosure is shown, and the cross-sectional image passes through the center of the particle of the first carbon-based material 200. As shown in FIG. 2, D represents the volume distribution particle size Dv50 of the particle of the first carbon-based material 200, a region formed by extending a distance of 0.25 D from the particle surface of the first carbon-based material 200 to the interior of the particle is denoted as an external region 201, and a region inside the external region 201 is denoted as an internal region 202.

The pore structure in the first carbon-based material may be observed by a cross-section polisher, for example, by performing an ion-polished cross-sectional profile (CP) test on the negative electrode plate. Specifically, the negative electrode plate is cut into a sample to be tested with a certain dimension (e.g., 2 cm × 2 cm), and the negative electrode plate is fixed on a sample stage by using paraffin; the sample stage is mounted in a sample holder and locked and fixed, an argon ion cross-section polisher (e.g., an IB-09010 CP argon ion cross-section polisher from JEOL Ltd., Japan) is powered on and vacuumized (e.g., 10-4 Pa), an argon flow rate (e.g., 0.15 MPa), a voltage (e.g., 8 KV) and a polishing time (e.g., 2 h) are set, and the sample stage is adjusted to a rocking mode to start polishing; and a certain portion of the first region 1021 is randomly selected from the sample to be tested for scanning test (e.g., refer to JY/T010-1996, and scanning is performed by using a scanning electron microscope), and an ion-polished cross-section profile (CP) picture of the negative electrode plate is acquired under a certain magnification (e.g., 1000 times). In this way, internal structures of other negative electrode active materials (e.g., additional carbon-based materials) in the other region 1020 may also be observed, such that the first carbon-based material may be distinguished from other negative electrode active materials. FIG. 3 is an ion-polished cross-sectional (CP) view of an embodiment of a first carbon-based material of the present disclosure. As can be seen from the figure, the external region of the second carbon-based material particles is denser than the internal region thereof, satisfying S2 > S1.

In the design of the electrode plate of the present disclosure, the upper layer adopts the first carbon material with a specific structure, the carbon material particles have a pore structure, and the pore area of the internal region is greater than the pore area of the external region, so the storage performance is good. The smaller pore area of the external region reflects that the degree of compactness near the surface of the material is higher, which effectively reduces the side reactions on the particle surface. At the same time, the pore structure with a larger area in the internal region reserves a certain space, which can effectively alleviate the stress caused by the expansion of the material during the cycling of the battery, such that the battery has good cycle performance. In addition, when the material has a relatively small particle size and is disposed in the first region of the negative electrode film layer, the kinetics performance of the battery can be improved. Therefore, the secondary battery according to the present disclosure further achieves improved kinetics performance while having good storage performance and cycle performance.

According to some embodiments, the volume distribution particle size Dv50 of the first carbon-based material is 7 µm to 13 µm. Illustratively, the volume distribution particle size Dv50 of the first carbon-based material is 7 µm, 8 µm, 9 µm, 10 µm, 11 µm, 12 µm, 13 µm, or the like. When the volume distribution particle size Dv50 of the first carbon-based material is within the above range, the kinetics performance of the secondary battery is further improved.

According to some embodiments, the first carbon-based material satisfies 1.5 ≤ S2/S1 ≤ 500, optionally 2.5 ≤ S2/S1 ≤ 450. Illustratively, the first carbon-based material satisfies 2.2 ≤ S₂/S₁ ≤ 400, 2.5 ≤ S₂/S₁ ≤ 300, 2.5 ≤ S₂/S₁ ≤ 250, 2.6 ≤ S₂/S₁ ≤ 200, 2.8 ≤ S₂/S₁ ≤ 150, or 3.0 ≤ S₂/S₁ ≤ 100. When S2/S1 is within the above range, the storage performance and cycle performance of the battery may be further improved.

According to some embodiments, an area of a pore structure in the external region of the first carbon-based material is less than or equal to 0.15 µm², optionally less than or equal to 0.13 µm²; and/or the internal region of the first carbon-based material includes one or more pore structures with a pore area greater than or equal to 0.15 µm², optionally one or more pore structures with a pore area of 0.15 µm² to 2.0 µm². That the external region of the first carbon-based material includes pore structures of the above sizes suggests a relatively denser external region of the particles of the material and a small size of the pore structures. With this structure of the first carbon-based material, the electrolytic solution will not easily enter the interior of the particles, thereby reducing the side reactions with the electrolytic solution. In addition, when a pore structure of a specific pore area of the first carbon-based material, in an aspect, sufficient and stable expansion space can be reserved for the volume change of the first carbon-based material particles, and in another aspect, the compaction density of the negative electrode film layer can be improved, thereby improving the storage performance, cycle performance and energy density of the secondary battery.

According to some embodiments, at least a portion of a surface of the first carbon-based material is provided with a carbon coating layer. When at least a portion of the surface of the first carbon-based material is provided with a carbon coating layer, the rapid migration of the active ions is facilitated, such that the kinetics performance of the secondary battery can be further improved. Generally, the carbon coating layer may be an amorphous carbon coating layer. According to a specific embodiment, the entire surface of the first carbon-based material is provided with a carbon coating layer.

The meaning of the term "coating layer" or "carbon coating layer" described herein is consistent with the meaning in the art. Generally, it means that the outer surface of the negative electrode active material, such as natural graphite particles, is coated with a layer of carbon source material (such as pitch), and heat treatment is performed to form a carbon coating layer. The thickness of the carbon coating layer is not particularly limited in the present disclosure, and a conventional coating thickness may be used in the embodiments.

According to some embodiments, the first carbon-based material includes primary particles. When the first carbon-based material mainly exists in the form of primary particles, it is beneficial to the transmission of active ions, such that the kinetics performance of the secondary battery can be improved. In some embodiments, a proportion of the primary particles in the first carbon-based material is ≥ 80%, optionally ≥ 85%, further optionally ≥ 90%. In some specific embodiments, the first carbon-based material is all primary particles.

In some embodiments, the specific capacity of the first carbon-based material is ≥ 355 mAh/g, optionally 355 mAh/g to 368 mAh/g. Illustratively, the specific capacity of the first carbon-based material is 355 mAh/g, 360 mAh/g, 363 mAh/g, 365 mAh/g, 367 mAh/g, or a value between any two values. A higher specific capacity is beneficial to the capacity density of the secondary battery.

In some embodiments, a degree of graphitization of the first carbon-based material is ≥ 95.0%, optionally 95.5% to 98.0%. Illustratively, the degree of graphitization of the first carbon-based material is 95.0%, 95.5%, 96%, 96.5%, 97%, 97.5%, 98%, or the like, or a value between any two values. A higher degree of graphitization is conducive to the compaction of the powder, thereby facilitating the energy density of the secondary battery.

In some embodiments, a specific surface area of the first carbon-based material is 1.0 m²/g to 2.8 m²/g, optionally 1.3 m²/g to 2.1 m²/g. Illustratively, the specific surface area of the first carbon-based material is 1.1 m²/g, 1.3 m²/g, 1.5 m²/g, 1.7 m²/g, 1.9 m²/g, 2.1 m²/g, 2.4 m²/g, or the like, or a value between any two values. A larger specific surface area is further beneficial to the improvement of the kinetics performance of the secondary battery.

According to some embodiments, the first carbon-based material satisfying at least one of the following is beneficial to at least one of kinetics performance, energy density, cycle performance and other performance of the secondary battery:
(1) the first carbon-based material satisfies: (Dv90-Dv10)/Dv50 ≤ 1.40, optionally 0.90 to 1.40;
(2) a powder compaction density of the first carbon-based material under a pressure of 50,000 N is 1.75 g/cm³ to 2.0 g/cm³, optionally 1.82 g/cm³ to 1.98 g/cm³;
(3) a tap density of the first carbon-based material is 0.90 g/cm³ to 1.30 g/cm³, optionally 0.95 g/cm³ to 1.25 g/cm³; and
(4) a volume distribution particle size Dv90 of the first carbon-based material is 13.0 µm to 30.0 µm, optionally 16.0 µm to 23.0 µm.

According to some embodiments, a region within a thickness range from the second surface of the negative electrode film layer to 0.3H is denoted as a second region of the negative electrode film layer, the second region is disposed between the negative electrode current collector and the first region, the second region includes a second negative electrode active material, and the second negative electrode active material includes a second carbon-based material.

In the embodiments, the second region of the negative electrode film layer is close to the negative electrode current collector (when the negative electrode current collector is used as a base layer, it is also referred to as a lower layer of the negative electrode film layer). The placement of the second carbon-based material, which is different from the first carbon-based material, in this region does not have a discernible impact on the kinetics performance of the secondary battery. Meanwhile, other secondary performance can be improved by means of the characteristics of the second carbon base, such as the energy density.

In some specific embodiments, the second carbon-based material includes artificial graphite. Compared with other carbon-based materials, such as soft carbon, hard carbon, and natural graphite, artificial graphite has insufficient kinetics performance. When the artificial graphite is disposed in the second region, the kinetics performance of the secondary battery will not be significantly affected, and meanwhile, since the artificial graphite has a good powder compaction density, the energy density of the secondary battery can be improved.

In the embodiments, the first carbon-based material is mainly disposed in the first region of the negative electrode film layer, and the second carbon-based material including artificial graphite is mainly disposed in the second region of the negative electrode film layer. The combination of the two materials enables the secondary battery to give consideration to the energy density and cycle performance while achieving improved kinetics performance.

More specifically, the first carbon-based material in the first region has good kinetics performance, which can now increase the charging speed, especially the speed in the early stage of charging (such as the first 50% of the capacity at the start of charging) can be significantly increased. In addition, because the two different carbon-based materials have different densities after being cold-pressed under the same pressure, upper and lower layers with different densities are formed in the negative electrode film layer. The density of the upper layer mainly made of the first carbon-based material is lower than the density of the lower layer mainly made of artificial graphite, so more migration channels can be provided for the active ions, and it is beneficial for the active ions to migrate to the lower layer of the negative electrode film layer and further come into contact with the second carbon-based material. This further improves the speed in the late charging period (for example, the capacity of the last 50% after charging starts).

Compared with the manner of reducing the compaction density of the negative electrode film layer to improve the kinetics performance of the negative electrode, or increasing the compaction density of the negative electrode film layer to improve the energy density, the embodiment can improve the kinetics performance of the secondary battery while also giving consideration to the energy density.

In addition, since the artificial graphite is structurally stable, the cycle life of the secondary battery is facilitated.

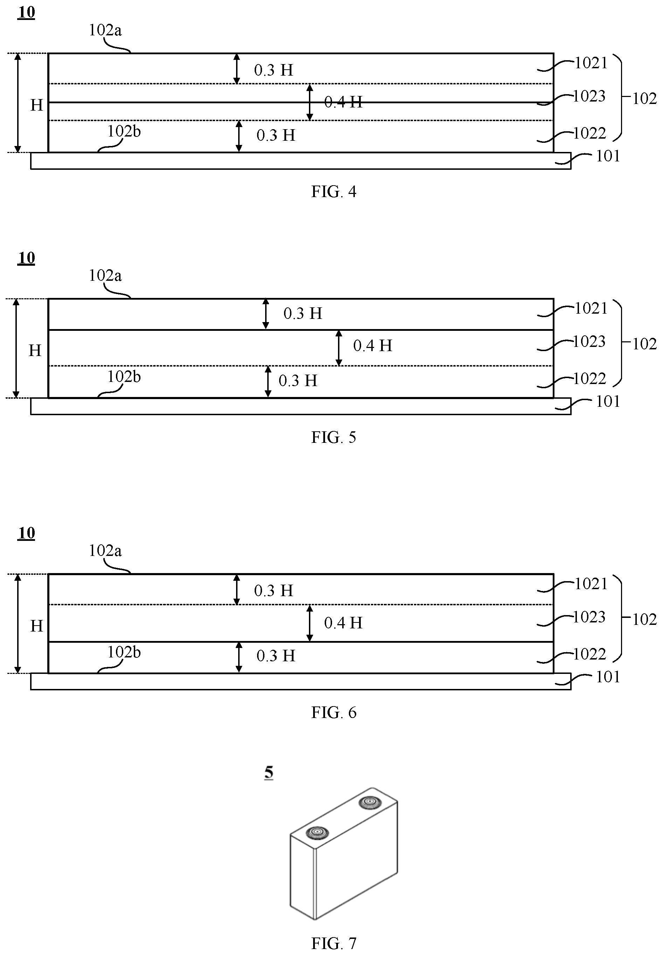

Further referring to FIGs. 4 to 6, schematic diagrams of three different embodiments of a negative electrode plate having a first region and a second region in which different negative electrode active materials are present are shown. As shown in FIGs. 4 to 6, similar to FIG. 1, the negative electrode plate 10 includes a negative electrode current collector 101 and a negative electrode film layer 102 formed on at least one surface of the negative electrode current collector 101. The negative electrode film layer 102 is provided with a first surface 102a away from the negative electrode current collector 101 and a second surface 102b opposite to the first surface 102a. The thickness of the negative electrode film layer 102 is H. On the side away from the negative electrode current collector 101, a region within a thickness range from the second surface 102b of the negative electrode film layer to 0.3 H is a first region 1021 of the negative electrode film layer. On the side close to the negative electrode current collector 101, a region within a thickness range from the first surface 102a of the negative electrode film layer to 0.3 H is denoted as a second region 1022 of the negative electrode film layer. The first region 1021 includes a first negative electrode active material including the first carbon-based material. The second region 1022 includes a second negative electrode active material including a second carbon-based material different from the first carbon-based material. Between the first region 1021 and the second region 1022, a region that occupies a thickness range of 0.4 H is denoted as a middle region 1023. It is easy to understand that, according to FIGs. 4 to 7, the middle region 1023 includes at least one of the first carbon-based material and the second carbon-based material.

Specifically, the figures show that the second carbon-based material and the first carbon-based material are sequentially applied onto the negative electrode current collector 101. FIG. 4 shows that the thickness of each of the two materials accounts for about half of the thickness of the negative electrode film layer 102. FIG. 5 shows that the thickness of the second carbon-based material accounts for about 70% of the thickness of the negative electrode film layer 102, and the thickness of the first carbon-based material accounts for about 30% of the thickness of the negative electrode film layer 102. FIG. 6 shows a reverse configuration of FIG. 5, that is, the thickness of the first carbon-based material accounts for about 70% of the thickness of the negative electrode film layer 102, and the thickness of the second carbon-based material accounts for about 30% of the thickness of the negative electrode film layer 102.

It should be understood that FIGs. 4 to 6 are schematic diagrams of an ideal case. The present disclosure does not particularly limit the ratio of the thicknesses of the first carbon-based material and the second carbon-based material; for example, the ratio may be within the range of 3:7 to 7:3. Illustratively, the ratio of the thickness of the first carbon-based material to the thickness of the second carbon-based material is 4:6, 5:5, 6:4, or the like, or a ratio between any two ratios.

It should also be understood that the middle region 1023 in FIGs. 4 to 6 shows a distinct boundary with the other two regions, while in reality there is no such distinct interface. As previously described, within the range of the middle region 1023, there may be both the first carbon-based material and the second carbon-based material. Similarly, there is no distinct interface between the first carbon-based material-containing coating and the second carbon-based material-containing coating.

According to some embodiments, the volume distribution particle size Dv50 of the first carbon-based material is less than the volume distribution particle size Dv50 of the second carbon-based material. Specifically, the volume distribution particle size Dv50 of the second carbon-based material is 13 µm to 19 µm, further optionally 14 µm to 18 µm. The volume distribution particle size Dv50 of the second carbon-based material is 14 µm, 15 µm, 16 µm, 17 µm, 18 µm, or the like, or a value between any two values. When the second carbon-based material has a particle size greater than that of the first carbon-based material, the adverse effect of the second carbon-based material on the kinetics performance of the secondary battery can be reduced as much as possible.

According to some embodiments, the powder compaction density of the second carbon-based material, in particular the artificial graphite, under a pressure of 50,000 N is 1.80 g/cm³ to 2.05 g/cm³, optionally 1.85 g/cm³ to 2.03 g/cm³. Illustratively, the powder compaction density of the second carbon-based material under a pressure of 50,000 N is 1.80 g/cm³, 1.85 g/cm³, 1.90 g/cm³, 1.95 g/cm³, 2.00 g/cm³, 2.05 g/cm³, or a value between the formed ranges of any two values. When the second carbon-based material with a higher powder compression density is disposed at the lower layer of the negative electrode film layer, it is beneficial to improve the energy density of the secondary battery.

According to some embodiments, the second carbon-based material includes artificial graphite with secondary particles. Optionally, a proportion of the artificial graphite with the secondary particles in the second carbon-based material is greater than or equal to 80%. When the second carbon-based material includes artificial graphite with secondary particles, each of the primary particles of the secondary particles is less likely to change the crystal plane orientation due to pressure in cold pressing. Therefore, compared with the use of the second carbon-based material only in the form of primary particles, the use of secondary particles can effectively reduce the tendency of the crystal plane orientation of artificial graphite to be parallel to the negative electrode current collector during cold pressing, thereby facilitating the shortening of the intercalation and deintercalation of active particles. This further facilitates the kinetics performance of the secondary battery, and in particular, increases the charging speed in the post-charging stage. In some specific embodiments, when the second carbon-based material is mainly in the form of secondary particles, or is entirely in the form of secondary particles, the kinetics performance of the secondary battery can be improved.

According to some embodiments, a particle size distribution of the second carbon-based material satisfies (Dv90-Dv10)/Dv50 ≤ 1.25, optionally 0.90 to 1.25. Illustratively, the particle size distribution of the second carbon-based material satisfies that (Dv90-Dv10)/Dv50 is 0.9, 1, 1.1, 1.2, or the like, or a value between the ranges formed by any two values. When the particle size distribution of the second carbon-based material is relatively narrow, the number of particles with a larger particle size is reduced, which is more conducive to contact with active ions, thereby improving the energy density of the secondary battery while better giving consideration to the kinetics performance.

According to some embodiments, a specific capacity of the first carbon-based material is greater than a specific capacity of the second carbon-based material. In some embodiments, the specific capacity of the second carbon-based material is 350 mAh/g to 365 mAh/g, optionally 352 mAh/g to 362 mAh/g. Illustratively, the specific capacity of the second carbon-based material is 352 mAh/g, 355 mAh/g, 358 mAh/g, 360 mAh/g, 362 mAh/g, or the like, or a value between the ranges formed by any two values. The higher specific capacity of the first carbon-based material and the second carbon-based material can jointly improve the energy density of the secondary battery.

According to some embodiments, the degree of graphitization of the first carbon-based material is greater than the degree of graphitization of the second carbon-based material. In some embodiments, the degree of graphitization of the second carbon-based material is 90.0% to 95.5%, optionally 92% to 95.5%. Illustratively, the degree of graphitization of the second carbon-based material is 92%, 92.5%, 93%, 93.5%, 94%, 94.5%, 95%, 95.5%, or the like, or a value between the ranges formed by any two values. A higher degree of graphitization is conducive to the compaction of the powder, thereby facilitating the energy density of the secondary battery.

According to some embodiments, the specific surface area of the first carbon-based material is greater than the specific surface area of the second carbon-based material. In some embodiments, the specific surface area BET of the second carbon-based material is 0.8 m²/g to 2 m²/g, optionally 1.1 m²/g to 1.7 m²/g. Illustratively, the specific surface area BET of the second carbon-based material is 1.0 m²/g, 1.1 m²/g, 1.2 m²/g, 1.3 m²/g, 1.4 m²/g, 1.5 m²/g, 1.6 m²/g, 1.7 m²/g, or the like, or a value between the ranges formed by any two values. The second carbon-based material is controlled to have a smaller specific surface area, which is beneficial to reduce side reactions and further improve the cycle performance of the secondary battery.

According to some embodiments, the second carbon-based material satisfying at least one of the following can further facilitate the energy density of the secondary battery:
(1) a tap density of the second carbon-based material is 0.85 g/cm³ to 1.25 g/cm³, optionally 0.90 g/cm³ to 1.15 g/cm³; and
(2) the second carbon-based material satisfies 0.050 ≤ I_{D}/I_{G} ≤ 0.300, optionally 0.070 ≤ I_{D}/I_{G} ≤ 0.200, where I_{D} represents a D peak intensity at 1350 ± 50 cm⁻¹ of a Raman spectrum, and I_{G} represents a G peak intensity at 1580 ± 50 cm⁻¹ of the Raman spectrum.

According to some embodiments, the negative electrode film layer further includes a silicon-based material. Optionally, a mass proportion of the silicon-based material in the negative electrode film layer is less than or equal to 10%, optionally 5% to 10%. The silicon-based material has a higher lithium intercalation potential, which is beneficial to improve the kinetics performance of the secondary battery. At the same time, the silicon-based material has a high specific capacity, which is beneficial to improve the energy density of the secondary battery. However, the lithium intercalation expansion of the silicon-based material is large, the stability is low, and the cycle performance is unfavorable, so the addition amount should not be too large. Illustratively, the mass proportion of the silicon-based material in the negative electrode film layer is 3%, 5%, 6%, 8%, or the like, or a value between any two values. The silicon-based material may be mixed with the first carbon-based material together as the first negative electrode active material, and/or the silicon-based material may be mixed with the second carbon-based material together as the second negative electrode active material.

The silicon-based material is not specified in the present disclosure, and a silicon-based material conventionally used as a negative electrode active material in the art may be used. Illustratively, the silicon-based material may be selected from at least one of elemental silicon, a silicon-oxygen compound, a silicon-carbon composite, a silicon-nitrogen composite, and a silicon alloy.

In some embodiments, a metal foil or a composite current collector may be used as the negative electrode current collector. For example, as the metal foil, a copper foil may be used. The composite current collector may include a polymer material base layer and a metal layer formed on at least one surface of the polymer material substrate. The composite current collector may be formed by forming a metal material (copper, copper alloy, nickel, nickel alloy, titanium, titanium alloy, silver, silver alloy, etc.) on a polymer material substrate (such as polypropylene (PP), polyethylene terephthalate (PET), polybutylene terephthalate (PBT), polystyrene (PS), and polyethylene (PE)).

In some embodiments, a negative electrode active material for use in batteries well known in the art may be further used as the negative electrode active material. As an example, the negative electrode active material may further include at least one of the following materials: natural graphite, soft carbon, hard carbon, a tin-based material, lithium titanate, and the like. The tin-based material may be selected from at least one of elemental tin, a tin-oxygen compound, and a tin alloy. However, the present disclosure is not limited to these materials, and other conventional materials that can be used as negative electrode active materials for batteries may also be used. These negative electrode active materials may be used alone or in combination of two or more.

In some embodiments, the negative electrode film layer further optionally includes a binder. The binder may be selected from at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally includes a conductive agent. The conductive agent may be selected from at least one of superconducting carbon, acetylene black, carbon black, Ketjen black, a carbon dot, a carbon nanotube, graphene, and a carbon nanofiber.

In some embodiments, the negative electrode film layer further optionally includes other auxiliary agents, such as a thickener (e.g., sodium carboxymethylcellulose (CMC-Na)).

The content of the binder and/or other auxiliary agents, if any, in the negative electrode film layer is not specified in the present disclosure. Those skilled in the art can determine a suitable content of the binder and/or other auxiliary agents through routine tests in the art.

According to some embodiments, the negative electrode film layer satisfying at least one of the following is beneficial to at least one of kinetics performance, energy density, and cycle performance of the secondary battery:
(1) a compaction density of the negative electrode film layer is ≤ 1.85 g/cm³, optionally 1.7 g/cm³ to 1.85 g/cm³; the compaction density within this range is advantageous for the energy density of the secondary battery; for example, the compaction density of the negative electrode film layer is 1.7 g/cm³, 1.75 g/cm³, 1.8 g/cm³, 1.85 g/cm³, or the like, or a value between any two values;
(2) a porosity of the negative electrode film layer is 18.0% to 38.0%, optionally 19.0% to 34.0%; for example, the porosity of the negative electrode film layer is 19%, 21%, 23%, 25%, 27%, 29%, 31%, 33%, or the like, or a value between any two values; the porosity within this range facilitates the migration of active ions, thereby facilitating the kinetics performance of the secondary battery;
(3) an OI value of the negative electrode film layer is ≤ 30.0, optionally 8.0 to 23.0; for example, the OI value of the negative electrode film layer is 8, 10, 12, 14, 16, 18, 20, 22, or the like, or a value between any two values; the OI value within this range reflects that the crystal plane orientation of the carbon-based material in the negative electrode film layer is not completely parallel to the negative electrode current collector, thereby shortening the migration path of the active ions and facilitating the kinetics performance of the secondary battery; and
(4) a thickness of the negative electrode film layer is greater than or equal to 40 µm, optionally 40 µm to 140 µm; for example, the thickness of the negative electrode film layer is 40 µm, 50 µm, 60 µm, 70 µm, 80 µm, 90 µm, 100 µm, 110 µm, 120 µm, 130 µm, 140 µm, or the like, or a value between any two values, but is not limited thereto.

The above embodiments are described only by taking the composition of the negative electrode film layer on one side surface of the negative electrode current collector as an example. It should be understood that the negative electrode current collector is provided with a negative electrode film layer described in the above embodiments that may be disposed on any one or both of two surfaces of the negative electrode current collector opposite to each other in a thickness direction of the negative electrode current collector. It should be noted that the parameters of the negative electrode film layer provided in the present disclosure (e.g., compaction density, areal density, porosity, thickness) refer to the parameters of the negative electrode film layer on one side of the negative electrode current collector. When the negative electrode film layer is disposed on both sides of the negative electrode current collector, if the parameters of the negative electrode film layer on either side meet the requirements of the present disclosure, it shall be considered to fall within the protection scope of the present disclosure.

In the present disclosure, the negative electrode plate described above does not exclude additional functional layers other than the negative electrode film layer. For example, in some embodiments, the negative electrode plate further includes a conductive bottom coating (e.g., composed of a conductive agent and a binder) interposed between the negative electrode current collector described above and the negative electrode film layer described above and disposed on the surface of the negative electrode current collector described above. In some embodiments, the negative electrode plate further includes a protective layer covering the surface of the negative electrode film layer described above.

In the present disclosure, the pore area and the values of S1 and S2 of the first carbon-based material can acquire a cross-section of the first carbon-based material by using a cross-section polisher (for example, an IB-09010 CP argon ion cross-section polisher from JEOL Ltd., Japan); then, with reference to JY/T010-1996, the cross-section of the first carbon-based material is scanned by using a scanning electron microscope (for example, a Sigma 300 scanning electron microscope from ZEISS, Germany); and finally, a pore area of any pore in the first carbon-based material, a total pore area S1 of the external region, and a total pore area S2 of the internal region are separately acquired by using image processing software (for example, AVIZO), and a value of S2/S1 is thus acquired. Illustratively, samples may be acquired from different regions of the negative electrode plate in the secondary battery, at least 5 positions (e.g., 5, 10, 15, or even more) are randomly selected from the samples to acquire cross-sections by using a cross-section polisher, and cross-sections of at least 10 particles (e.g., 10, 20, 50, or even more particles) are randomly selected from scanning electron microscope images of the respective cross-sections, a total pore area S2' of an internal region and a total pore area S1' of an external region in each particle cross-section are acquired by using image processing software according to the above definition, and a value of S2'/S1' of each particle cross-section is thus acquired. The arithmetic mean value of S2'/S1' of all measured particle cross-sections is calculated as the value of S2/S1 of the first carbon-based material.

In the X-ray diffraction (XRD) analysis test of the present disclosure, a copper target may be used as an anode target, a CuKα ray is used as a radiation source, a ray wavelength is λ = 1.5418 Å, a scanning 2θ angle range is 20° to 80°, and a scanning rate is 4°/min.

In the present disclosure, the volume distribution particle sizes Dv10, Dv50, and Dv90 of the materials (e.g., the first carbon-based material, the second carbon-based material, etc.) have meanings well known in the art, which respectively represent the particle sizes corresponding to the cumulative volume distribution percentages of the materials reaching 10%, 50%, and 90%, and can be measured using instruments and methods known in the art. For example, a laser particle size analyzer may be used for the measurement with reference to GB/T 19077-2016. The test instrument may be the Mastersizer 3000 laser particle size analyzer from Malvern Instruments Ltd., United Kingdom.

In the present disclosure, whether the coating layer is present on the surface of the material (e.g., the first carbon-based material, the second carbon-based material, etc.) can be determined by a transmission electron microscope.

In the present disclosure, the BET specific surface area of the material (e.g., the first carbon-based material, the second carbon-based material, etc.) has a meaning well known in the art, and can be measured using instruments and methods known in the art. For example, the specific surface area of the material can be measured using the analysis and test method of specific surface area by nitrogen adsorption with reference to GB/T 19587-2017, and calculated by the BET (Brunauer Emmett Teller) method. The test instrument may be the Tri-Star 3020 specific surface area pore size analysis tester from Micromeritics, USA.

In the present disclosure, the degree of graphitization of the material (e.g., the first carbon-based material or the second carbon-based material) has a meaning well known in the art, and can be measured using instruments and methods known in the art. For example, an X-ray diffractometer (e.g., Bruker D8 Discover) may be used for the measurement. The measurement may be performed with reference to JIS K 0131-1996 and JB/T 4220-2011 to give the average interlayer spacing d₀₀₂ of the C(002) crystal plane in the crystal structure of the material, and then the degree of graphitization is calculated according to the formula g = (0.344 - d₀₀₂)/(0.344 - 0.3354) × 100%. In the above formula, d₀₀₂ is the average interlayer spacing of the C(002) crystal planes in the crystal structure of the material in nanometers (nm).

In the present disclosure, the specific capacity of a material (e.g., the first carbon-based material or the second carbon-based material) is a meaning well known in the art, and can be tested by methods known in the art. An exemplary test method is as follows: The sample powder, a conductive agent carbon black (Super P), and a binder polyvinylidene fluoride (PVDF) are mixed uniformly in a solvent N-methylpyrrolidone (NMP) at a mass ratio of 91.6:1.8:6.6 to prepare a slurry; the prepared slurry is applied onto the surface of the negative electrode current collector copper foil and dried in an oven for later use; ethylene carbonate (EC), ethyl methyl carbonate (EMC), and diethyl carbonate (DEC) are mixed at a volume ratio of 1:1:1 to obtain an organic solvent, and then LiPF₆ is dissolved in the organic solvent to prepare an electrolytic solution with a concentration of 1 mol/L; then, a CR2430 button battery is assembled with the electrolytic solution using a metallic lithium foil as a counter electrode and a polyethylene (PE) thin film as a separator in an argon-protected glove box; the obtained button battery is left to stand for 12 h, then discharged at a constant current of 0.05C to 0.005 V at 25 °C, left to stand for 10 min, discharged at a constant current of 50 µA to 0.005 V again, left to stand for 10 min, and discharged at a constant current of 10 µA to 0.005 V again; and then charged at a constant current of 0.1C to 2 V, and the charge capacity is recorded. The ratio of the charge capacity to the mass of the sample is the specific capacity of the corresponding material (e.g., the first carbon-based material or the second carbon-based material).

In the present disclosure, the powder compaction density of the material (e.g., the first carbon-based material or the second carbon-based material) is a meaning well known in the art, and can be measured by instruments and methods known in the art. For example, the measurement may be performed by an electronic compression tester (for example, a UTM7305 electronic compression tester) with reference to GB/T 24533-2009. An exemplary test method is as follows: 1 g of the sample powder is weighed and added into a mold with a bottom area of 1.327 cm², and the mold is pressurized to 50,000 N, maintained for 30 s, and then depressurized and maintained for 10 s; and then the powder compaction density of the material under a pressure of 50,000 N is recorded and calculated.

In the present disclosure, the tap density of a material (e.g., the first carbon-based material or the second carbon-based material) is a meaning well known in the art, and can be measured by instruments and methods known in the art. For example, the measurement can be performed with reference to the GB/T 5162-2006 using a powder tap density tester. The testing instrument may be a Bettersize BT-301, with the following parameters: vibration frequency of 250 ± 15 times/minute, amplitude of 3 ± 0.2 mm, total vibrations of 5000 times, and graduated cylinder volume of 25 mL.

In the present disclosure, both the primary particles and the secondary particles have meanings well known in the art. A primary particle refers to a particle in a non-agglomerated state. A secondary particle refers to a particle in an agglomerated state formed by aggregation of primary particles. The primary particles and the secondary particles can be distinguished by using scanning electron microscope (SEM) images.

In the present disclosure, the proportion of the number of the primary particles in the first carbon-based material and/or the second carbon-based material refers to that: For example, any test sample is selected from the negative electrode film layer, a plurality of test regions are selected from the test sample, and images of the plurality of test regions are acquired by using a scanning electron microscope; and the proportion of the number of the first carbon-based material in the primary particle morphology in each image to the total number of the first carbon-based material particles is counted, and the average value of the plurality of counting results is the proportion of the number of the primary particles in the first carbon-based material.

In the present disclosure, the proportion of the number of the secondary particles in the first carbon-based material and/or the second carbon-based material refers to that: For example, any test sample is selected from the negative electrode film layer, a plurality of test regions are selected from the test sample, and images of the plurality of test regions are acquired by using a scanning electron microscope; the proportion of the number of the second carbon-based material in the secondary particle morphology in each image to the total number of the second carbon-based material particles is counted, and the average value of the plurality of counting results is the proportion of the number of the secondary particles in the second carbon-based material.

In the present disclosure, the areal density of the negative electrode film layer is a meaning well known in the art, and can be tested by methods known in the art. For example, a single-sided coated and cold-pressed negative electrode plate may be used (if a double-sided coated negative electrode plate is used, the negative electrode film layer on one side may be wiped off first) and punched into small circular samples with an area of S'. The sample is weighed, and the weight is recorded as M1. Then, the negative electrode film layer of the weighed negative electrode plate is wiped off, and the weight of the negative electrode current collector is measured and recorded as M0. The areal density of the negative electrode plate = (M1 - M0)/S'.

In the present disclosure, the compaction density of the negative electrode film layer is a meaning well known in the art, and can be tested by methods known in the art. [Compaction density of the negative electrode film layer = areal density of the negative electrode film layer/thickness of the negative electrode film layer].

In the present disclosure, the porosity of the negative electrode film layer has a meaning well known in the art and can be measured by methods known in the art. An exemplary test method is as follows: A single-sided coated and cold-pressed negative electrode plate is used (if a double-sided coated negative electrode plate is used, the negative electrode film layer on one side may be wiped off first) and punched into small circular samples with a certain area, and the apparent volume V₁ of the negative electrode plate is calculated. Referring to GB/T24586-2009, an inert gas (e.g., helium or nitrogen) is used as the medium, and the true volume V₂ of the negative electrode plate is measured by gas displacement using a true density analyzer. The porosity of the negative electrode film layer = (V₁ - V₂)/V₁ × 100%. Multiple negative electrode plate samples (e.g., 30 samples) with good appearance and no powder shedding at the edges may be tested, and the mean value of the results is used as the test result, thereby improving the accuracy of the test results. The test instrument may be a Micromeritics AccuPyc II 1340 true density analyzer.

In the present disclosure, the OI value of the negative electrode film layer has a meaning well known in the art, and can be tested by instruments and methods known in the art. For example, an X-ray diffractometer (e.g., Bruker D8 Discover) may be used for the test. For the test, reference may be made to JIS K 0131-1996 and JB/T 4220-2011 to obtain an X-ray diffraction pattern of the negative electrode plate, and the OI value of the negative electrode film layer is calculated based on OI value = I₀₀₄/I₁₁₀. I₀₀₄ is an integrated area of a diffraction peak of a crystal plane 004 of the crystalline carbon in the negative electrode film layer, and I₁₁₀ is an integrated area of a diffraction peak of a crystal plane 110 of the crystalline carbon in the negative electrode film layer. In the X-ray diffraction analysis and test of the present disclosure, a copper target may be used as an anode target, a CuKα ray is used as a radiation source, a ray wavelength is λ = 1.5418 Å, a scanning 2θ angle range is 20° to 80°, and a scanning rate is 4°/min.

The thickness of the negative electrode film layer is a meaning well known in the art, and can be tested by methods known in the art, for example, by using a micrometer (e.g., Mitutoyo 293-100 type, with a precision of 0.1 µm). The thickness range given in the present disclosure is the thickness range of the negative electrode film layer on one side of the negative electrode current collector. The thickness of the negative electrode film layer on any side of the negative electrode current collector is within the range given in the present disclosure, that is, the present disclosure is satisfied.

It should be noted that the above-mentioned testing of various parameters of the negative electrode active material or the negative electrode film layer can be performed by sampling the prepared secondary battery according to the following steps.

The secondary battery is subjected to a discharge process (for safety reasons, the secondary battery is typically in a fully discharged state). After disassembly of the secondary battery, the negative electrode plate is extracted and immersed in dimethyl carbonate for a certain period (e.g., 2 h to 10 h). The negative electrode plate is then removed and subjected to a drying process at a specified temperature and duration (e.g., 60 °C for more than 4 h). After drying, the negative electrode plate is collected. At this point, samples can be taken from the dried negative electrode plate to test the above parameters related to the negative electrode film layer, such as the areal density, compaction density, porosity, and thickness of the negative electrode film layer.

The dried negative electrode plate is baked at a certain temperature for a certain period of time (e.g., 400 °C, more than 2 h), a region in the baked negative electrode plate is randomly selected, and a negative electrode active material is sampled (a blade is selected for sampling); and the collected negative electrode active material is sieved (e.g., sieved with a 200-mesh sieve), to finally obtain a sample that can be used for testing the parameters of the negative electrode active material.

In the present disclosure, the first carbon-based material may be prepared by the following method of the present disclosure; the second carbon-based material may be commercially available, or may also be prepared by the following method of the present disclosure.

In some embodiments, a method for preparing the first carbon-based material includes: step 1, providing a starting material having a plurality of pore structures; step 2, uniformly mixing the starting material and a filling material according to a predetermined proportion, performing heat preservation at a first temperature T₁ for a first time t₁, and cooling the mixture to room temperature to obtain an intermediate; and step 3, performing heat preservation on the obtained intermediate at a second temperature T₂ for a second time t₂ to obtain the first carbon-based material.

In some embodiments, in step 1, the starting material for preparing the first carbon-based material includes natural graphite. Optionally, the natural graphite includes one or more of flake graphite, natural spherical graphite, and microcrystalline graphite, and particularly includes natural spherical graphite.

The "natural spherical graphite" refers to natural graphite having a spherical or spheroidal shape, and not all natural graphite particles are controlled to be ideal spheres. In some embodiments, the flake graphite may be pretreated to obtain natural spherical graphite with a desired particle size and morphology. Optionally, the pretreatment includes procedures such as crushing, classification, spheroidization, and purification.

In some embodiments, in step 1, the volume distribution particle size Dv50 of the starting material may be 6 µm to 13 µm.

In some embodiments, in step 1, a specific surface area of the starting material may be ≥ 2.5 m²/g, optionally 2.5 m²/g to 10.0 m²/g. When the specific surface area of the starting material is within the above range, it is beneficial for performing the subsequent filling treatment and obtaining the first carbon-based material with the required specific surface area, it is also beneficial for the first carbon-based material to have high capacity and high initial coulombic efficiency at the same time, and in addition, it is also beneficial for the first carbon-based material to have better kinetics performance.

In some embodiments, in step 2, the filling material has a softening point temperature of 90 °C to 150 °C. Optionally, the filling material has a softening point temperature of 94 °C to 146 °C, 94 °C to 142 °C, 94 °C to 138 °C, 94 °C to 134 °C, 94 °C to 130 °C, 104 °C to 146 °C, 104 °C to 142 °C, 104 °C to 138 °C, 104 °C to 134 °C, or 104 °C to 130 °C.

In some embodiments, in step 2, the volume distribution particle size Dv50 of the filling material is less than or equal to 6 µm, optionally 1 µm to 6 µm, 1 µm to 5 µm, 2 µm to 5 µm, or 3 µm to 5 µm. Therefore, it is beneficial for the filling material to be filled into the pore structure of the starting material after being heated and melted, and it is also beneficial to improve the dispersion uniformity of the filling material and the starting material.

In some embodiments, in step 2, a coking value of the filling material is 15% to 40%, optionally 18% to 34%. In the present disclosure, the coking value of the filling material is well known in the art, and can be measured by instruments and methods known in the art. For example, the measurement may be performed with reference to GB/T 8727-2008.

In some embodiments, in step 2, the filling material includes one or more of coal pitch, petroleum pitch, a polymer compound, and a resin, optionally one or more of coal pitch and petroleum pitch.

In some embodiments, in step 2, a mass ratio of the filling material to the starting material is (10-40):100, optionally (10-30):100, (10-25):100, (10-20):100, (12-30):100, (14-28):100, or (15-25):100.

In step 2, by adjusting one or more parameters of the type, the softening point, the coking value, the addition amount, and the like of the filling material within the above ranges, it is beneficial to adjust the number and/or the size of the pores in the external region and the internal region of the first carbon-based material within an appropriate range, and it is beneficial to adjust S2/S1 of the first carbon-based material within an appropriate range.

By adjusting parameters such as the type, the softening point, the coking value, and the addition amount of the filling material within the above ranges, after the filling material is heated and melted, the viscosity is not high, good fluidity is maintained, and meanwhile, the starting material particles are not easily bonded, such that agglomeration of the starting material particles in a subsequent preparation process can be reduced, thereby further reducing problems such as an increase in surface defects and an increase in surface active sites of the first carbon-based material particles due to the need to add a depolymerization process.

In some embodiments, in step 2, the heating process of first uniformly mixing the starting material and the filling material according to a predetermined proportion and then heating the mixture to the first temperature T₁ may be a staged heating process.

In some embodiments, the staged heating process includes a first heating process, a second heating process, and a third heating process.

In some embodiments, the first heating process is to heat the mixture to 200 °C to 250 °C and maintain the temperature for 0.5 h to 3 h.

In some embodiments, the second heating process is to heat the mixture to 450 °C to 550 °C and maintain the temperature for 0 h to 2 h. When the heat preservation time is 0 h, it means that the heat preservation treatment is not performed when the mixture is heated to a temperature within a range of 450 °C to 550 °C, but the mixture is continuously heated to the first temperature T₁.

In some embodiments, the third heating process is to heat the mixture to the first temperature T₁ and maintain the temperature for the first time t₁.

In the staged heating process, the temperature is first raised to 200 °C to 250 °C. Since the heating temperature is higher than the softening point temperature of the filling material, the filling material is heated, melted and softened at this time, and kept warm for 0.5 h to 3 h to be filled into the pore structures of the starting material in a flowing manner; then the temperature is raised to 450 °C to 550 °C, at this time, the melted and softened filling material undergoes a carbonization reaction and gradually forms a semi-char state to become a viscous liquid or solid, thereby preventing the filling material from entering all the pore structures of the starting material; and finally the temperature is raised to the first temperature, and at this time, the filling material undergoes a carbonization reaction, thereby effectively filling the pore structures occupied by the filling material.

In some embodiments, in step 2, the temperature is raised to the first temperature T1 at a rate of 1 °C/min to 10 °C/min. For example, the heating rate may be 1 °C/min, 2 °C/min, 3 °C/min, 4 °C/min, 5 °C/min, 6 °C/min, 7 °C/min, 8 °C/min, 9 °C/min, 10 °C/min, or a range formed by any of the above values. Optionally, the heating rate is 1.5 °C/min to 8 °C/min, 1.5 °C/min to 6 °C/min, 2 °C/min to 6 °C/min, or 2 °C/min to 5 °C/min.

In some embodiments, the heating rate for the first heating process may be 1 °C/min to 10 °C/min, optionally 1.5 °C/min to 8 °C/min, 1.5 °C/min to 6 °C/min, 2 °C/min to 6 °C/min, or 2 °C/min to 5 °C/min. In some embodiments, the heating rate for the second heating process may be 1 °C/min to 10 °C/min, optionally 2 °C/min to 8 °C/min. In some embodiments, the heating rate for the third heating process may be 1 °C/min to 10 °C/min, optionally 2 °C/min to 8 °C/min.

In some embodiments, in step 2, the first temperature T₁ is 800 °C to 1200 °C. For example, the first temperature T₁ may be 800 °C, 850 °C, 900 °C, 950 °C, 1000 °C, 1050 °C, 1100 °C, 1200 °C, or a range formed by any of the above values. Optionally, the first temperature T₁ is 800 °C to 1100 °C, 850 °C to 1100 °C, 900 °C to 1100 °C, or 850 °C to 1000 °C.

In some embodiments, in step 2, the first time t₁ is 1 h to 5 h. For example, the first time t₁ may be 1 h, 1.5 h, 2 h, 2.5 h, 3 h, 3.5 h, 4 h, 4.5 h, 5 h, or a range formed by any of the above values. Optionally, the first time t₁ is 2 h to 4 h.

In some embodiments, in step 2, the heat treatment may be performed in a device capable of temperature programming, such as a medium-frequency furnace, a roller kiln, a rotary kiln, a pusher kiln, a vertical pelletizing tank, a horizontal pelletizing tank, a vertical reaction kettle, a horizontal reaction kettle, or a drum furnace.

In some embodiments, in step 2, the heat treatment atmosphere may be a protective gas atmosphere. The protective gas may include one or more of nitrogen, argon, and helium.

In step 2, by adjusting one or more of the heating rate, the first temperature, the first time, the heating process, and the like within the above ranges, it is beneficial to adjust the number and/or the size of the pores in the external region and the internal region of the first carbon-based material within an appropriate range, and thus it is beneficial to adjust the S₂/S₁ of the first carbon-based material within an appropriate range.

In some embodiments, in step 3, the first temperature T₂ is 1600 °C to 2800 °C. Optionally, the second temperature T₂ is 1600 °C to 2700 °C, 1600 °C to 2600 °C, 1600 °C to 2500 °C, 1600 °C to 2400 °C, 1800 °C to 2600 °C, 1800 °C to 2500 °C, 1800 °C to 2400 °C, 2000 °C to 2500 °C, or 2000 °C to 2400 °C.

In some embodiments, in step 3, the second time t₂ is 1.5 h to 6 h. For example, the second time t₁ may be 2 h, 2.5 h, 3 h, 3.5 h, 4 h, 4.5 h, 5 h, 5.5 h, 6 h, or a range formed by any of the above values. Optionally, the second time t2 is 2 h to 5 h.

In some embodiments, in step 3, the heat treatment may be performed in a medium-frequency furnace, a box-type graphitization furnace, an Acheson graphitization furnace, a continuous graphitization furnace, or an inner-string graphitization furnace.

In some embodiments, in step 3, the medium-frequency furnace and the continuous graphitization heat treatment atmosphere may be a protective gas atmosphere. The protective gas may include one or more of nitrogen, argon, and helium.

In step 3, by adjusting one or more of the second temperature and the second time within the above ranges, it is beneficial to adjust the content of disordered carbon in the first carbon-based material within an appropriate range, such that the first carbon-based material has an appropriate degree of graphitization, interlayer spacing, I_{D}/I_{G}, and the like.

In the method for preparing the first carbon-based material described above, by adjusting one or more of the parameters of the natural graphite, the parameters of the filling material, the heating rate, the first temperature, the first time, the heating process, the second temperature, the second time, and the like within the above ranges, it is beneficial to adjust the parameters of the second carbon-based material, such as S₂/S₁, the degree of graphitization, the specific capacity, the specific surface area, the particle size, the powder compaction density, and the tap density.

According to some embodiments, the first carbon-based material may be provided with a coating layer. The preparation method further includes a step 4 of mixing the first carbon-based material prepared above with an organic carbon source and performing carbonization at a third temperature T3. The organic carbon source may be a carbon-containing material suitable for coating known in the art, and may include, for example, one or more of coal pitch, petroleum pitch, phenolic resin, coconut shell, and the like. In some embodiments, the first carbon-based material mixed with the organic carbon source is carbonized by holding the first carbon-based material at a third temperature T3 of 1150 °C to 1500 °C for 1 h to 3 h, to obtain the first carbon-based material with at least a portion of the surface being provided with a carbon coating layer.

In some embodiments, the artificial graphite as the second carbon-based material may be prepared according to methods in the prior art. Illustratively, it may be prepared by the following method.

A starting material is provided; the starting material is crushed and shaped to obtain a first intermediate; the first intermediate is graphitized to obtain a second intermediate; and the second intermediate is mixed with an organic carbon source, followed by carbonization treatment and screening, to obtain a second carbon-based material.

The starting material may be one or more of petroleum coke, needle coke, pitch coke, and metallurgical coke. The starting material may be crushed using a mechanical mill or a roll mill, and shaped using a shaper.

In some embodiments, the graphitization temperature is 2800 °C to 3200 °C. By adjusting the graphitization temperature and/or the graphitization time, it is beneficial for the second carbon-based material to have an appropriate degree of graphitization.

In some embodiments, the organic carbon source may be a carbonaceous material suitable for coating known in the art. For example, the organic carbon source may include one or more of coal pitch, petroleum pitch, phenolic resin, coconut shell, and the like. By adjusting the addition amount of the organic carbon source, parameters such as the specific surface area, the degree of graphitization, and the specific capacity of the second carbon-based material can be adjusted. The carbonization temperature may be 900 °C to 1300 °C. By adjusting the carbonization temperature and/or the carbonization holding time, it is beneficial to adjust parameters such as the specific surface area, the degree of graphitization, and the specific capacity of the second carbon-based material.

In the preparation process, by adjusting one or more of parameters of various devices (such as a mechanical mill or a roll mill, a shaper, and a pelletizer), parameters of starting materials, an addition amount of the organic carbon source, an addition amount of the binder, the graphitization temperature, the graphitization time, and the like, it is beneficial to adjust parameters such as the degree of graphitization, the powder compaction density, the specific capacity, the particle size, and the specific surface area of the second carbon-based material.

In order to obtain the artificial graphite with the secondary particles, the binder pitch may be used to pelletize the precursor before graphitization, and then the pelletized product is graphitized at 2800 °C to 3200 °C to obtain the artificial graphite with the secondary particles.

The present disclosure further provides a method for preparing the negative electrode plate of the present disclosure. The method includes the following steps: providing a first negative electrode slurry including the first negative electrode active material in the above embodiments and a second negative electrode slurry including the second negative electrode active material in the above embodiments; applying the second negative electrode slurry onto the negative electrode current collector, and applying the first negative electrode slurry onto the second negative electrode slurry, followed by drying and cold pressing, to obtain a negative electrode plate.

In some embodiments, the first negative electrode slurry and the second negative electrode slurry may each further optionally include the above conductive agent, binder, other optional auxiliary agents and solvent (e.g., deionized water).

The first slurry and the second slurry may be applied simultaneously at one time or may be applied in two separate times. In some embodiments, the first slurry and the second slurry are applied simultaneously at one time. The simultaneous coating at one time can reduce the resistance of the negative electrode film layer, thereby further improving the kinetics performance and the cycle performance of the secondary battery.

The coating weights of the first slurry and the second slurry are adjustable according to the actual situation.

### [Positive Electrode Plate]

The secondary battery of the present disclosure further includes a positive electrode plate. The positive electrode plate includes a positive electrode current collector and a positive electrode film layer disposed on at least one surface of the positive electrode current collector, and the positive electrode film layer includes a positive electrode active material. The positive electrode plate is not particularly limited in the present disclosure.

As an example, the positive electrode current collector is provided with two surfaces opposite to each other in its own thickness direction, and the positive electrode film layer is disposed on any one or both of the two opposite surfaces of the positive electrode current collector.

In some embodiments, a metal foil or a composite current collector may be used as the positive electrode current collector. For example, as the metal foil, an aluminum foil may be used. The composite current collector may include a polymer material base layer and a metal layer formed on at least one surface of the polymer material base layer. The composite current collector may be formed by forming a metal material (aluminum, aluminum alloy, nickel, nickel alloy, titanium, titanium alloy, silver, silver alloy, etc.) on a polymer material substrate (such as polypropylene (PP), polyethylene terephthalate (PET), polybutylene terephthalate (PBT), polystyrene (PS), and polyethylene (PE)).

In some embodiments, when the battery cell is a lithium-ion battery, a positive electrode active material for use in lithium-ion batteries well known in the art may be used as the positive electrode active material. As an example, the positive electrode active material may include at least one of the following materials: a lithium-containing phosphate with an olivine structure, a lithium transition metal oxide, and respective modified compounds thereof. However, the present disclosure is not limited to these materials, and other conventional materials that can be used as positive electrode active materials for batteries may also be used. These positive electrode active materials may be used alone or in combination of two or more. Examples of the lithium transition metal oxide may include, but are not limited to, at least one of a lithium cobalt oxide (such as LiCoO₂), a lithium nickel oxide (such as LiNiO₂), a lithium manganese oxide (such as LiMnO₂ or LiMn₂O₄), a lithium nickel cobalt oxide, a lithium manganese cobalt oxide, a lithium nickel manganese oxide, a lithium nickel cobalt manganese oxide (such as LiNi_{1/3}Co_{1/3}Mn_{1/3}O₂ (also referred to as NCM₃₃₃), LiNi_{0.5}Co_{0.2}Mn_{0.3}O₂ (also referred to as NCM₅₂₃), LiNi_{0.5}Co_{0.25}Mn_{0.25}O₂ (also referred to as NCM₂₁₁), LiNi_{0.6}Co_{0.2}Mn_{0.2}O₂ (also referred to as NCM₆₂₂), LiNi_{0.8}Co_{0.1}Mn_{0.1}O₂ (also referred to as NCM₈₁₁)), a lithium nickel cobalt aluminum oxide (such as LiNi_{0.85}Co_{0.15}Al_{0.05}O₂), and modified compounds thereof. Examples of the lithium-containing phosphate with an olivine structure may include, but are not limited to, at least one of lithium iron phosphate (such as LiFePO₄ (also referred to as LFP)), a composite material of lithium iron phosphate and carbon, lithium manganese phosphate (such as LiMnPO₄), a composite material of lithium manganese phosphate and carbon, lithium manganese iron phosphate, and a composite material of lithium manganese iron phosphate and carbon.

The battery, during the charging and discharging process, undergoes deintercalation and consumption of active ions such as Li, and the molar content of active ions such as Li varies when the battery is discharged to different states. In the examples of the positive electrode material listed in the present disclosure, the molar content of Li is in an initial state of the material, that is, a state before the material is added, and when the positive electrode material is applied to a battery system, the molar content of Li may vary after charge-discharge cycles.

In the examples of the positive electrode material listed in the present disclosure, the molar content of O is only a theoretical value. The molar content of oxygen may vary due to oxygen release from the crystal lattice, and actually, the molar content of O will fluctuate.

In some embodiments, the positive electrode film layer further optionally includes a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorinated acrylic resin.

In some embodiments, the positive electrode film layer further optionally includes a conductive agent. As an example, the conductive agent may include at least one of superconducting carbon, acetylene black, carbon black, Ketjen black, a carbon dot, a carbon nanotube, graphene, and a carbon nanofiber.

In some embodiments, the positive electrode plate can be prepared in the following manner: dispersing the components described above for preparing the positive electrode plate, such as the positive electrode active material, the conductive agent, the binder, and any other components, in a solvent (such as N-methylpyrrolidone) to form a positive electrode slurry; and coating the positive electrode current collector with the positive electrode slurry, and performing drying, cold pressing, and other processes, such that the positive electrode plate can be obtained.

### [Electrolyte]

The electrolyte conducts ions between the positive electrode plate and the negative electrode plate. The present disclosure has no specific limitations on the type of the electrolyte, which can be selected according to needs. For example, the electrolyte may be liquid, gel, or all solid.

In some embodiments, the electrolyte is an electrolytic solution. The electrolytic solution includes an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluorobis(oxalato)phosphate, and lithium tetrafluoro(oxalato)phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, and diethyl sulfone.

In some embodiments, the electrolytic solution further optionally includes an additive. The additive may include a negative electrode film-forming additive and a positive electrode film-forming additive, and may further include an additive capable of improving certain properties of the battery, such as an additive for improving the overcharge performance of the battery, and an additive for improving the high- or low-temperature performance of the battery.

### [Separator]

In some embodiments, the battery cell further includes a separator. The present disclosure does not particularly limit the type of the separator, and any porous-structure separator known to have good chemical stability and mechanical stability may be selected.

In some embodiments, the separator may be made of a material selected from at least one of glass fiber, nonwoven fabric, polyethylene, polypropylene, and polyvinylidene fluoride. The separator may be a single-layer film or a multi-layer composite film, and there is no particular limitation on this. When the separator is a multi-layer composite film, the materials of the layers may be the same or different, and there is no particular limitation on this.

In some embodiments, the positive electrode plate, the negative electrode plate, and the separator may be manufactured into an electrode assembly through a winding process or a stacking process.

In some embodiments, the battery cell may include an outer packaging. The outer packaging can be used for packaging the electrode assembly and electrolyte described above.

In some embodiments, the outer packaging of the battery cell may be a hard housing, such as a hard plastic housing, an aluminum housing, or a steel housing. The outer packaging of the battery cell may also be a soft pack, such as a pouch-type soft pack. The soft pack may be made of plastic, and examples of the plastic may include polypropylene, polybutylene terephthalate, polybutylene succinate, and the like.

The present disclosure does not particularly limit the shape of the battery cell, and it may have a cylindrical shape, a prismatic shape, or any other shape. For example, FIG. 7 shows a battery cell 5 having a prismatic structure as an example.

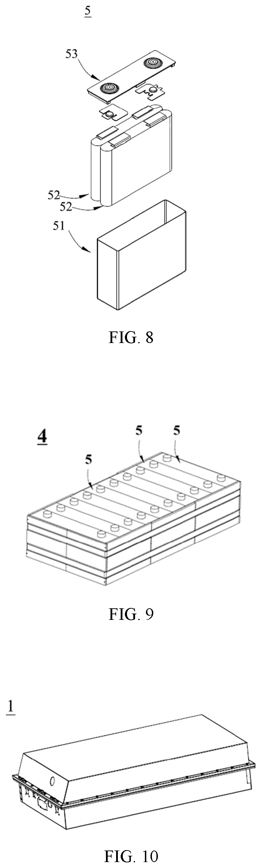

In some embodiments, referring to FIG. 8, the outer packaging may include a housing 51 and a top cover assembly 53. The housing 51 may include a bottom plate and side plates connected to the bottom plate, and the bottom plate and the side plates define, in an enclosing manner, an accommodating cavity. The housing 51 is provided with an opening in communication with the accommodating cavity, and the top cover assembly 53 is capable of lidding the opening to close the accommodating cavity. The positive electrode plate, the negative electrode plate, and the separator may be subjected to a winding process or a stacking process to form an electrode assembly 52. The electrode assembly 52 is packaged in the accommodating cavity. The electrolytic solution is infiltrated into the electrode assembly 52. The number of the electrode assemblies 52 included in the battery cell 5 may be one or more, and those skilled in the art can select the number according to specific and actual requirements.

According to some embodiments, the battery cell may be assembled into a battery module. The number of battery cells included in the battery module may be one or more, and the specific number may be selected by those skilled in the art based on the use and capacity of the battery module.

FIG. 9 shows a battery module 4 as one example. Referring to FIG. 9, in the battery module 4, a plurality of battery cells 5 may be sequentially disposed in a length direction of the battery module 4. Certainly, the arrangement may also be in any other manner. Further, the plurality of battery cells 5 may be fixed by fasteners.

Optionally, the battery module 4 may further include a shell having an accommodating space in which the plurality of battery cells 5 are accommodated.

In some embodiments, the battery module described above may also be assembled into a battery pack. The number of battery modules included in the battery pack may be one or more, and the specific number may be selected by those skilled in the art based on the use and capacity of the battery pack.

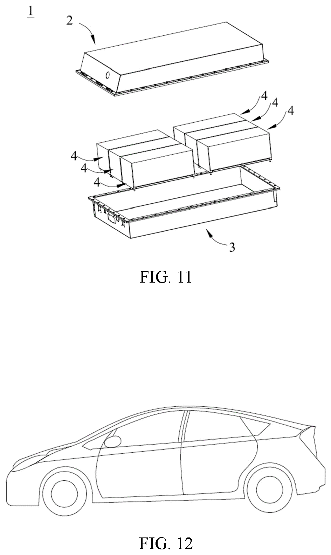

FIGs. 10 and 11 show a battery pack 1 as one example. Referring to FIGs. 7 and 8, the battery pack 1 may include a battery case and a plurality of battery modules 4 disposed in the battery case. The battery case includes an upper case body 2 and a lower case body 3. The upper case body 2 is capable of lidding the lower case body 3 to form a closed space for accommodating the battery modules 4. The plurality of battery modules 4 may be arranged in any manner in the battery case.

In addition, a second aspect of the present disclosure further provides an electric device, which includes the secondary battery according to the above embodiments. The secondary battery may be used as a power source for the electric device, or as an energy storage unit for the electric device. The electric device may include, but is not limited to, a mobile device (e.g., a mobile phone or a laptop computer), an electric vehicle (e.g., a pure electric vehicle, a hybrid electric vehicle, a plug-in hybrid electric vehicle, an electric bicycle, an electric scooter, an electric golf cart, or an electric truck), an electric train, a ship, or a satellite, an energy storage system, or the like.

As the electric device, a battery cell, a battery module, or a battery pack may be selected according to usage requirements thereof.

FIG. 12 shows an electric device as one example. The electric device is a pure electric vehicle, a hybrid electric vehicle, a plug-in hybrid electric vehicle, or the like. To meet the requirements of the electric device for high power and high energy density of the secondary battery, a battery pack or a battery module may be used.

As another example, the device may be a mobile phone, a tablet computer, a laptop computer, or the like. The device is generally required to be light and thin, and a battery cell can thus be used as a power source.

### Examples

Hereinafter, embodiments of the present disclosure will be described. The embodiments described below are exemplary and are merely used to explain the present disclosure, and they should not be construed as limiting the present disclosure. The examples without techniques or conditions specified therein are implemented according to techniques or conditions described in the literature in the art or according to product instructions. Reagents or instruments used herein without specified manufacturers are all commercially available conventional products.

The materials used in the embodiments of the present disclosure are prepared by the following process.

### Preparation of material 1-1:

The flake graphite was mechanically crushed, spheroidized, and then purified to obtain natural spherical graphite with a volume distribution particle size Dv50 of 12 µm. The obtained natural spherical graphite was mixed with a filler petroleum pitch (the softening point of the petroleum pitch was 110 °C) in a ratio of 100:22, and then the mixed material was placed in a device capable of temperature programming, heated to 200 °C and kept warm for 1 h, continuously heated to 700 °C and kept warm for 1 h, and then cooled to room temperature to obtain an intermediate. The obtained intermediate was placed in a graphitization furnace and subjected to graphitization heat treatment at 2510 °C, and then subjected to demagnetization and sieving. The resulting material and asphalt were mixed in a ratio of 100:15 and subjected to heat treatment at 1100 °C to obtain a material 1-1 with a coating layer. Material 1-1 satisfies: S2/S1 = 15, volume distribution particle size Dv50 = 12.0 µm, specific surface area BET = 2.0 m²/g, and degree of graphitization = 96.8%.

### Preparation of materials 1-2 to 1-6:

The methods for preparing materials 1-2 to 1-6 are similar to that of material 1-1, and the difference is that: The volume distribution particle size Dv50 of the natural spherical graphite was adjusted to obtain materials 1-2 to 1-6. Details are as follows:

**Table 1.**

| Material Number | Dv50 of the starting material (µm) | Dv50 of the first carbon-based material (µm) |
|---|---|---|
| 1-1 | 11.6 | 12.0 |
| 1-2 | 14.2 | 14.8 |
| 1-3 | 12.5 | 13.0 |
| 1-4 | 9.8 | 10.5 |
| 1-5 | 6.5 | 7.2 |
| 1-6 | 5.7 | 6.5 |
| 1-7 | 17.0 | 17.8 |

### Preparation of material 2-1:

The needle coke was used as a starting material, crushed using a roll mill, and shaped using a shaper. The shaped starting material was granulated using petroleum pitch as a binder. Graphitization treatment was then performed at 3000 °C to obtain the artificial graphite material 2-1 with secondary particles, which served as the second carbon-based material. The volume distribution particle size Dv50 (of secondary particles) of material 2-1 was 14.5, and the degree of graphitization = 94.3%.

### Preparation of materials 2-2 to 2-6:

The methods for preparing materials 2-2 to 2-6 are similar to that of material 2-1, and the difference is that: The granulation time was adjusted to obtain materials 2-2 to 2-6.

Details are as follows:

**Table 2.**

| Material Number | Volume distribution particle size Dv50 of the starting material after granulation (µm) | Granulation time (h) | Volume distribution particle size Dv50 of finished material (µm) |
|---|---|---|---|
| 2-1 | 15.1 | 3.8 | 14.5 |
| 2-2 | 12.4 | 2.5 | 12.0 |
| 2-3 | 13.6 | 3 | 13.2 |
| 2-4 | 16.3 | 4.6 | 15.8 |
| 2-5 | 18.1 | 5 | 17.5 |
| 2-6 | 20.3 | 6 | 20.0 |

### Example 1

### Preparation of secondary battery:

1. Negative electrode plate: A first negative electrode active material (material 1-1, used as a first carbon-based material) and a second negative electrode active material (material 2-1, used as a second carbon-based material) were fully stirred and mixed with a conductive agent carbon black (Super P), a thickener sodium carboxymethylcellulose, and a binder styrene-butadiene rubber in an appropriate amount of solvent deionized water at a weight ratio of 96.4:1:1.2:1.4, to form a first negative electrode slurry and a second. The second negative electrode slurry and the first negative electrode slurry were sequentially applied onto two surfaces of a negative electrode current collector copper foil in an equal mass ratio, followed by drying and cold-pressing, to obtain a negative electrode plate.
2. Positive electrode plate: LiNi_{0.5}Co_{0.2}Mn_{0.3}O₂ (NCM523), a conductive agent carbon black (Super P), and a binder polyvinylidene fluoride were mixed at a weight ratio of 96:2:2 and stirred uniformly in an appropriate amount of solvent N-methylpyrrolidone (NMP) to obtain a positive electrode slurry. The positive electrode slurry was applied onto two surfaces of a positive electrode current collector aluminum foil, followed by drying and cold pressing, to obtain a positive electrode plate.
3. Electrolytic solution: Ethylene carbonate (EC), ethyl methyl carbonate (EMC), and diethyl carbonate (DEC) were mixed in a volume ratio of 1:1:1 to obtain an organic solvent, and then LiPF₆ was dissolved in the above organic solvent to prepare an electrolytic solution with a concentration of 1 mol/L.
4. Separator: A polypropylene film was used.
5. Preparation of secondary battery: The positive electrode plate and the negative electrode plate prepared above were placed in sequence, such that a separator was located between the positive electrode plate and the negative electrode plate to play an isolating role, and then wound to obtain an electrode assembly; and the electrode assembly was placed in an outer packaging, dried, injected with an electrolytic solution, and then subjected to vacuum packaging, standing, formation, shaping, and other processes to obtain a secondary battery.

### Examples 2 to 6

A secondary battery was prepared according to a method similar to that of Example 1. The difference is that the volume distribution particle size Dv50 of the first carbon-based material was selected to be different.

### Comparative Example 1

A battery was prepared according to a method similar to that of Example 1. The difference is that the volume distribution particle size Dv50 of the first carbon-based material was greater than 15 µm.

### Performance Test

### 1. Material testing

S2/S1 of the first carbon-based material was obtained by the following method.

A binder for sample preparation was uniformly mixed with first carbon-based material powders, the mixture was then applied onto a copper foil, and the copper foil was dried at 60 °C for 30 min for later use; five samples to be tested with a dimension of 6 mm × 6 mm were cut at five different positions and separately pasted on a sample stage of a CP-type argon ion cross-section polisher; and the samples were cut by using plasma beams to obtain cross-sections of the samples. The test instrument was an IB-09010 CP argon ion cross-section polisher from JEOL Ltd., Japan.

A scanning electron microscope was used to scan each sample cross-section of the first carbon-based material, and a scanning image was acquired in any selected region of each sample cross-section. For the test, reference was made to JY/T010-1996. The test instrument was a Sigma 300 scanning electron microscope from ZEISS, Germany.

Cross-sections of 20 particles of the first carbon-based material were randomly selected from the scanning images. A region formed by extending a distance of 0.25 µm from the particle surface of the first carbon-based material to the interior of the particle was denoted as an external region, and a region inside the external region was denoted as an internal region. A total pore area S1' of an external region of each particle cross-section and a pore area S2' of an internal region of the first carbon-based material were acquired by using image processing software, and a value of S2'/S1' was calculated; and an arithmetic average value of S2'/S1' of all 20 particles was calculated as the value of S2/S1 of the first carbon-based material. The image processing software was AVIZO.

### 2. Battery performance test

### (1) Cycle performance test of secondary battery

At 45 °C, the secondary battery prepared above was charged at a constant current of 1C to an upper limit cut-off voltage (corresponding to 100% SOC), then charged at a constant voltage to a current of 0.05C, allowed to stand for 5 min, and then discharged at a constant current of 1C to a lower limit cut-off voltage (corresponding to 0% SOC). The discharge capacity at this time, i.e., the discharge capacity of the first cycle, was recorded. The secondary battery was subjected to a cyclic charging and discharging test according to the above method, and the discharge capacity after each cycle was recorded.

Capacity retention rate (%) of the secondary battery after 1000 cycles at 45 °C = discharge capacity after 1000 cycles/discharge capacity of the first cycle × 100%.

### (2) Storage performance test of secondary battery

At 25 °C, the secondary battery prepared above was charged to 4.3 V at a constant current of 1C, then charged at a constant voltage to a current of 0.05C, allowed to stand for 5 min, and then discharged to 2.8 V at a constant current of 1C. The discharge capacity at this time, i.e., the discharge capacity before storage, was recorded.

At 25 °C, the secondary battery prepared above was charged to 4.3 V at a constant current of 1C, and then charged at a constant voltage to a current of 0.05C. Then, the secondary battery was stored in a constant temperature chamber at 60 °C for 180 days. Capacity retention rate (%) of the secondary battery stored at 60 °C for 180 days = discharge capacity after storage/discharge capacity before storage × 100%.

### (3) Kinetics test of secondary battery

At 25 °C, the secondary battery was charged to 4.3 V at a constant current of 0.33C, then charged at a constant voltage to a current of 0.05C, allowed to stand for 5 min, and then discharged to 2.8 V at a constant current of 0.33C. The actual capacity of the secondary battery was recorded as C0.

Then, the secondary battery was charged to 4.3 V or 0 V negative electrode cut-off potential (whichever occurred first) at a constant current of 1.0C0, 1.3C0, 1.5C0, 1.8C0, 2.0C0, 2.3C0, 2.5C0, and 3.0C0, sequentially, and then discharged to 2.8 V at 1C0 after each charging was completed, and the negative electrode potentials corresponding to 10%, 20%, 30%, ..., 80% state of charge (SOC) were recorded for different charging rates. A charging rate-negative electrode potential curve was plotted for different SOC states, and linear fitting was performed to determine the charging rate corresponding to a negative electrode potential of 0 V at different SOC states. The charging rates were defined as the charge windows at the given SOC state and were recorded as C10%SOC, C20%SOC, C30%SOC, C40%SOC, C50%SOC, C60%SOC, C70%SOC, and C80%SOC. The charging time T (in minutes, on the premise that no lithium plating occurred in the secondary battery) required for the secondary battery to charge from 10% SOC to 80% SOC was calculated according to the formula: (60/C20%SOC + 60/C30%SOC + 60/C40%SOC + 60/C50%SOC + 60/C60%SOC + 60/C70%SOC + 60/C80%SOC) × 10%. Shorter charging time demonstrates more excellent kinetics performance of the secondary battery.

### (4) Energy density test of secondary battery

At 25 °C, the secondary battery was charged to 4.3 V at a constant current of 1/3C, then charged to a current of 0.05C at a constant voltage of 4.3 V, allowed to stand for 5 min, and then discharged to 2.8 V at a constant current of 1/3C. The discharge energy of the battery at this time was recorded. The volumetric energy density of the battery was acquired by dividing the discharge energy of the battery by the volume of the battery, with the unit of Wh/L.

The batteries prepared in Examples 1 to 6 and Comparative Example 1 were tested according to the above test methods (1) to (3), and the used negative electrode active materials and test results are shown in Table 4.

**Table 3.**

| Serial number | **First carbon-based material** | | **Second carbon-based material** | | **Secondary Battery Performance** | | |
|---|---|---|---|---|---|---|---|
| | Material Number | Dv50 (µm) | Material Number | Dv50 (µm) | Capacity retention rate (%) after 1000 cycles at 45 °C | Capacity retention rate (%) after 180-day storage at 60 °C | Charging time (min) |
| Example 1 | 1-1 | 12.0 | 2-1 | 14.5 | 86.3% | 90.1% | 24.3 |
| Example 2 | 1-2 | 14.8 | 2-1 | 14.5 | 86.9% | 91.2% | 25.9 |
| Example 3 | 1-3 | 13.0 | 2-1 | 14.5 | 86.4% | 91.1% | 24.9 |
| Example 4 | 1-4 | 10.5 | 2-1 | 14.5 | 85.5% | 90.0% | 23.5 |
| Example 5 | 1-5 | 7.2 | 2-1 | 14.5 | 85.2% | 89.2% | 21.6 |
| Example 6 | 1-6 | 6.5 | 2-1 | 14.5 | 84.7% | 88.9% | 20.1 |
| Comparative Example 1 | 1-7 | 17.8 | 2-1 | 14.5 | 86.7% | 91.1% | 27.3 |

It can be seen from Table 3 that as the particle size of the first carbon-based material decreases, the charging time gradually decreases, indicating that the kinetics performance is gradually improved, while the cycle performance and the storage performance are slightly reduced. In Comparative Example 1, the first carbon-based material has a relatively large particle size, and good cycle performance and storage performance, with a significant decrease in kinetics performance.

### Examples 7 to 11

A secondary battery was prepared according to a method similar to that of Example 1. The difference is that the volume distribution particle size Dv50 of the second carbon-based material was selected to be different. The batteries prepared in Example 1 and Examples 7 to 11 were tested according to the above test methods (3) to (4), and the used negative electrode active materials and test results are shown in Table 4.

**Table 4.**

| Serial number | **First carbon-based material** | | **Second carbon-based material** | | **Secondary Battery Performance** | |
|---|---|---|---|---|---|---|
| | Material Number | Dv50 (µm) | Material Number | Dv50 (µm) | Energy density (Wh/kg) | Charging Time (min) |
| Example 1 | 1-1 | 12.0 | 2-1 | 14.5 | 220.0 | 24.3 |
| Example 7 | 1-1 | 12.0 | 2-2 | 12.0 | 217.8 | 23.1 |
| Example 8 | 1-1 | 12.0 | 2-3 | 13.2 | 218.6 | 23.7 |
| Example 9 | 1-1 | 12.0 | 2-4 | 15.8 | 220.9 | 25.0 |
| Example 10 | 1-1 | 12.0 | 2-5 | 17.5 | 221.5 | 25.8 |
| Example 11 | 1-1 | 12.0 | 2-6 | 20.0 | 221.9 | 26.2 |

It can be seen from Table 3 that as the particle size of the second carbon-based material decreases, the charging time gradually decreases, indicating that the kinetics performance is gradually improved and the energy density is reduced.

It should be noted that the present disclosure is not limited to the embodiments described above. The embodiments described above are merely examples, and any embodiments having a structure substantially identical to the technical concept and exerting the same functional effects within the scope of the technical solutions of the present disclosure are all included within the technical scope of the present disclosure. Furthermore, without departing from the spirit of the present disclosure, various modifications that can be conceived by those skilled in the art to the embodiments, as well as other embodiments formed by combining some of the constituent elements of the embodiments, are also included within the scope of the present disclosure.

## Claims

1. A secondary battery, comprising a negative electrode plate, wherein the negative electrode plate comprises a negative electrode current collector and a negative electrode film layer located on at least one surface of the negative electrode current collector,
the negative electrode film layer is provided with a first surface away from the negative electrode current collector and a second surface opposite to the first surface, and a thickness of the negative electrode film layer is denoted as H;
wherein a region within a thickness range from the first surface of the negative electrode film layer to 0.3H is denoted as a first region of the negative electrode film layer, the first region comprises a first negative electrode active material, and the first negative electrode active material comprises a first carbon-based material; in a cross-sectional view of the first carbon-based material, a volume distribution particle size Dv50 of the first carbon-based material is denoted as D, the first carbon-based material comprises an external region and an internal region located inside the external region, the external region refers to a region formed by extending a distance of 0.25D from a particle surface of the first carbon-based material to an interior of a particle, a total pore area of the external region is denoted as S1, a total pore area of the internal region is denoted as S2, and then the first carbon-based material satisfies S2 > S1, and moreover, the volume distribution particle size Dv50 of the first carbon-based material is less than or equal to 15 µm.

2. The secondary battery according to claim 1, wherein the volume distribution particle size Dv50 of the first carbon-based material is 7 µm to 13 µm.

3. The secondary battery according to claim 1 or 2, wherein 1.5 ≤ S2/S1 ≤ 500, optionally 2.5 ≤ S2/S1 ≤ 450.

4. The secondary battery according to any one of claims 1 to 3, wherein an area of a pore structure in the external region of the first carbon-based material is less than or equal to 0.15 µm², optionally less than or equal to 0.13 µm²; and/or
the internal region of the first carbon-based material comprises one or more pore structures with an area greater than or equal to 0.15 µm², optionally one or more pore structures with an area of 0.15 µm² to 2.0 µm².

5. The secondary battery according to any one of claims 1 to 4, wherein at least a portion of a surface of the first carbon-based material is provided with a carbon coating layer.

6. The secondary battery according to any one of claims 1 to 5, wherein the first carbon-based material comprises primary particles; and optionally, a proportion of the primary particles in the first carbon-based material is ≥ 80%.

7. The secondary battery according to any one of claims 1 to 6, wherein a region within a thickness range from the second surface of the negative electrode film layer to 0.3H is denoted as a second region of the negative electrode film layer, the second region is disposed between the negative electrode current collector and the first region, the second region comprises a second negative electrode active material, and the second negative electrode active material comprises a second carbon-based material; and optionally, the second carbon-based material comprises artificial graphite.

8. The secondary battery according to any one of claim 7, wherein the volume distribution particle size Dv50 of the first carbon-based material is less than a volume distribution particle size Dv50 of the second carbon-based material;
optionally, the volume distribution particle size Dv50 of the second carbon-based material is 13 µm to 19 µm, and more optionally, 14 µm to 18 µm.

9. The secondary battery according to claim 7 or 8, wherein a powder compaction density of the second carbon-based material under a pressure of 50,000 N is 1.80 g/cm³ to 2.05 g/cm³, optionally 1.85 g/cm³ to 2.03 g/cm³.

10. The secondary battery according to any one of claims 7 to 9, wherein a surface of the second carbon-based material is provided with no coating layer.

11. The secondary battery according to any one of claims 7 to 10, wherein the second carbon-based material comprises artificial graphite with secondary particles; and optionally, a proportion of the artificial graphite with the secondary particles in the second carbon-based material is greater than or equal to 80%.

12. The secondary battery according to any one of claims 7 to 11, wherein a particle size distribution of the second carbon-based material satisfies (Dv90-Dv10)/Dv50 ≤ 1.25, optionally 0.90 to 1.25.

13. The secondary battery according to any one of claims 7 to 12, wherein a specific capacity of the first carbon-based material is greater than a specific capacity of the second carbon-based material;
optionally, the specific capacity of the first carbon-based material is ≥ 355 mAh/g, and further optionally, 355 mAh/g to 368 mAh/g;
optionally, the specific capacity of the second carbon-based material is 350 mAh/g to 365 mAh/g, and further optionally, 352 mAh/g to 362 mAh/g.

14. The secondary battery according to any one of claims 7 to 13, wherein
a degree of graphitization of the first carbon-based material is 95.0%, optionally 95.5% to 98.0%; and/or
a degree of graphitization of the second carbon-based material is 90.0% to 95.5%, optionally 92.0% to 95.5%.

15. The secondary battery according to any one of claims 7 to 14, wherein
a specific surface area of the first carbon-based material is 1.0 m²/g to 2.8 m²/g, optionally 1.3 m²/g to 2.1 m²/g; and/or
a specific surface area of the second carbon-based material is 0.8 m²/g to 2.0 m²/g, optionally 1.1 m²/g to 1.7 m²/g.

16. The secondary battery according to any one of claims 1 to 15, wherein the first carbon-based material satisfies at least one of the following:
(1) the first carbon-based material satisfies: (Dv90-Dv10)/Dv50 ≤ 1.40, optionally 0.90 to 1.40;
(2) a powder compaction density of the first carbon-based material under a pressure of 50,000 N is 1.75 g/cm³ to 2.0 g/cm³, optionally 1.80 g/cm³ to 1.98 g/cm³;
(3) a tap density of the first carbon-based material is 0.90 g/cm³ to 1.30 g/cm³, optionally 0.95 g/cm³ to 1.25 g/cm³; and
(4) a volume distribution particle size Dv90 of the first carbon-based material is 13 µm to 30 µm, optionally 16 µm to 23 µm.

17. The secondary battery according to any one of claims 7 to 16, wherein the second carbon-based material satisfies at least one of the following:
(1) a tap density of the second carbon-based material is 0.85 g/cm³ to 1.25 g/cm³, optionally 0.90 g/cm³ to 1.15 g/cm³; and
(2) the second carbon-based material satisfies 0.050 ≤ I_{D}/I_{G} ≤ 0.300, optionally 0.070 ≤ I_{D}/I_{G} ≤ 0.200, wherein I_{D} represents a D peak intensity at 1350 ± 50 cm⁻¹ of a Raman spectrum, and I_{G} represents a G peak intensity at 1580 ± 50 cm⁻¹ of the Raman spectrum.

18. The secondary battery according to any one of claims 7 to 17, wherein the first negative electrode active material and/or the second negative electrode active material further comprises a silicon-based material; and optionally, a mass proportion of the silicon-based material in the first negative electrode active material is less than or equal to 10%, optionally 5% to 10%, and/or a mass proportion of the silicon-based material in the second negative electrode active material is less than or equal to 10%, optionally 5% to 10%.

19. The secondary battery according to any one of claims 1 to 18, wherein the negative electrode film layer satisfies at least one of the following:
(1) a compaction density of the negative electrode film layer is ≤ 1.85 g/cm³, optionally 1.45 g/cm³ to 1.75 g/cm³;
(2) a porosity of the negative electrode film layer is 18.0% to 38.0%, optionally 19.0% to 34.0%;
(3) an OI value of the negative electrode film layer is ≤ 30.0, optionally 8.0 to 23.0; and
(4) a thickness of the negative electrode film layer is greater than or equal to 40 µm, optionally 40 µm to 140 µm.

20. An electric device, comprising the secondary battery according to any one of claims 1 to 19.
